# EUROPEAN PATENT SPECIFICATION

(11) **EP 4 173 423 B1**
(45) Date of publication and mention of the grant of the patent: **03.07.2024**
(21) Application number: 21745514.6
(22) Date of filing: 23.06.2021
(51) Int. Cl.: H04W 74/00, H04W 74/0808

(54) **CHANNEL OCCUPANCY TIME SHARING BASED ON RECEIVED SIGNAL STRENGTH**
KANALBELEGUNGSZEITTEILUNG AUF BASIS DER EMPFANGENEN SIGNALSTÄRKE
PARTAGE DE TEMPS D'OCCUPATION DE CANAL SUR LA BASE D'UNE INTENSITÉ DE SIGNAL REÇUE

(30) Priority: 24.06.2020 GR 20200100358
(43) Date of publication of application: 03.05.2023
(73) Proprietor: QUALCOMM INCORPORATED, San Diego, California 92121-1714 (US)
(72) Inventor: GUBESKYS, Arthur, San Diego, California 92121 (US); WU, Shuanshuan, San Diego, California 92121 (US); STEFANATOS, Stelios, San Diego, California 92121 (US); ZHANG, Xiaoxia, San Diego, California 92121 (US); GAAL, Peter, San Diego, California 92121 (US); LUO, Tao, San Diego, California 92121 (US); SUN, Jing, San Diego, California 92121 (US)
(74) Representative: Bardehle Pagenberg Partnerschaft mbB Patentanwälte Rechtsanwälte
(86) International application number: PCT/US2021/038765
(87) International publication number: WO 2021/262896

(56) References cited:
- US-A1- 2017 078 887
- US-A1- 2018 368 090

## Description

### Cross-Reference to Related Application(s)

This application claims benefit of and priority to Greek Patent Application No. 20200100358, filed June 24, 2020 which is hereby assigned to the assignee hereof.

### INTRODUCTION

Aspects of the present disclosure relate to wireless communications, and more particularly, to techniques for sharing frequency resources.

Wireless communication systems are widely deployed to provide various telecommunication services such as telephony, video, data, messaging, broadcasts, etc. These wireless communication systems may employ multiple-access technologies capable of supporting communication with multiple users by sharing available system resources (e.g., bandwidth, transmit power, etc.). Examples of such multiple-access systems include 3rd Generation Partnership Project (3GPP) Long Term Evolution (LTE) systems, LTE Advanced (LTE-A) systems, code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems, to name a few.

These multiple access technologies have been adopted in various telecommunication standards to provide a common protocol that enables different wireless devices to communicate on a municipal, national, regional, and even global level. New radio (e.g., 5G NR) is an example of an emerging telecommunication standard. NR is a set of enhancements to the LTE mobile standard promulgated by 3GPP. NR is designed to better support mobile broadband Internet access by improving spectral efficiency, lowering costs, improving services, making use of new spectrum, and better integrating with other open standards using OFDMA with a cyclic prefix (CP) on the downlink (DL) and on the uplink (UL). To these ends, NR supports beamforming, multiple-input multiple-output (MIMO) antenna technology, and carrier aggregation.

However, as the demand for mobile broadband access continues to increase, there exists a need for further improvements in NR and LTE technology. Preferably, these improvements should be applicable to other multi-access technologies and the telecommunication standards that employ these technologies.
Document US 2018/368090 A1 (Samsung Electronics Co., Ltd.) discloses methods and systems for achieving D2D communications through unlicensed spectrum. The D2D-U operations can be achieved through multiple approaches. In the first approach, the devices can communicate with each other without any involvement of network. In the second approach, the network provides partial assistance to the devices such as allocating time and frequency resources for D2D-U communication. In the third approach, the network completely controls D2D-U operations between the devices.
Document US 2017/078887 A1 (Qualcomm Incorporated) discloses methods and apparatus for managing reuse of a wireless medium. One method of managing reuse of a wireless medium includes determining, at an access point, whether to allow reuse of the wireless medium by one or more stations in a basic service set (BSS). The method further includes transmitting, upon determining to allow reuse, an indication that reuse of the wireless medium can be permitted for stations meeting a criteria. The method further includes determining one or more reuse parameters. The method further includes transmitting the one or more reuse parameters.

### SUMMARY

The invention is defined in independent claims. Dependent claims concern particular embodiments of the invention.

The systems, methods, and devices of the disclosure each have several aspects, no single one of which is solely responsible for its desirable attributes. Without limiting the scope of this disclosure as expressed by the claims, which follow, some features will now be discussed briefly. After considering this discussion, and particularly after reading the section entitled "Detailed Description" one will understand how the features of this disclosure provide advantages.

Certain aspects of the subject matter described in this disclosure relate to a method for wireless communications performed by a first user equipment (UE), comprising: receiving a first transmission from a second UE, the first transmission indicating the second UE has acquired a frequency band for a channel occupancy time (COT). The method also includes transmitting a signal within the frequency band during the COT in response to a signal strength of the first transmission as received by the first UE being greater than at least one threshold.

Certain aspects of the subject matter described in this disclosure can be implemented in an apparatus for wireless communication. The apparatus generally includes means for receiving a first transmission from a second UE, the first transmission indicating the second UE has acquired a frequency band for a channel occupancy time (COT). The apparatus also includes means for transmitting a signal within the frequency band during the COT in response to a signal strength of the first transmission as received by the first UE being greater than at least one threshold.

Certain aspects of the subject matter described in this disclosure can be implemented in an apparatus for wireless communication. The apparatus generally includes a memory; and a processor coupled to the memory, the memory and the processor configured to receive a first transmission from a second UE, the first transmission indicating the second UE has acquired a frequency band for a channel occupancy time (COT). The memory and the processor are also configured to transmit a signal within the frequency band during the COT in response to a signal strength of the first transmission as received by the first UE being greater than at least one threshold.

Certain aspects of the subject matter described in this disclosure can be implemented in a computer-readable medium for wireless communication by a first user equipment (UE). The medium including instructions that, when executed by a processing system of the first UE, cause the processing system to perform operations generally including receiving a first transmission from a second UE, the first transmission indicating the second UE has acquired a frequency band for a channel occupancy time (COT). The operations also include transmitting a signal within the frequency band during the COT in response to a signal strength of the first transmission as received by the first UE being greater than at least one threshold.

Certain aspects of the subject matter described in this disclosure can be implemented in a method for wireless communication by a first user equipment (UE). The method generally includes receiving a first transmission from a second UE, the first transmission indicating the second UE has acquired a frequency band for a channel occupancy time (COT); measuring a signal strength of the first transmission as received by the first UE; and when the measured signal strength is greater than at least one threshold, transmitting a signal within the frequency band during the COT.

Certain aspects of the subject matter described in this disclosure can be implemented in an apparatus for wireless communication. The apparatus generally includes means for receiving a first transmission from a user equipment (UE), the first transmission indicating the UE has acquired a frequency band for a channel occupancy time (COT); means for measuring a signal strength of the first transmission as received by the apparatus; and means for, when the measured signal strength is greater than at least one threshold, transmitting a signal within the frequency band during the COT.

Certain aspects of the subject matter described in this disclosure can be implemented in an apparatus for wireless communication. The apparatus generally includes a memory; and a processor coupled to the memory, the memory and the processor configured to: receive a first transmission from a user equipment (UE), the first transmission indicating the UE has acquired a frequency band for a channel occupancy time (COT); measure a signal strength of the first transmission as received by the apparatus; and when the measured signal strength is greater than at least one threshold, to transmit a signal within the frequency band during the COT.

Certain aspects of the subject matter described in this disclosure can be implemented in a computer-readable medium for wireless communication by a first user equipment (UE). The medium including instructions that, when executed by a processing system of the first UE, cause the processing system to perform operations generally including: receiving a first transmission from a second UE, the first transmission indicating the second UE has acquired a frequency band for a channel occupancy time (COT); measuring a signal strength of the first transmission as received by the first UE; and when the measured signal strength is greater than at least one threshold, transmitting a signal within the frequency band during the COT.

To the accomplishment of the foregoing and related ends, the one or more aspects comprise the features hereinafter fully described and particularly pointed out in the claims. The following description and the appended drawings set forth in detail certain illustrative features of the one or more aspects. These features are indicative, however, of but a few of the various ways in which the principles of various aspects may be employed.

### BRIEF DESCRIPTION OF THE DRAWINGS

So that the manner in which the above-recited features of the present disclosure can be understood in detail, a more particular description, briefly summarized above, may be had by reference to aspects, some of which are illustrated in the drawings. It is to be noted, however, that the appended drawings illustrate only certain typical aspects of this disclosure and are therefore not to be considered limiting of its scope, for the description may admit to other equally effective aspects.
**FIG. 1** is a block diagram conceptually illustrating an example wireless communication network, in accordance with certain aspects of the present disclosure.
**FIG. 2** is a block diagram conceptually illustrating a design of an example of a base station (BS) and user equipment (UE), in accordance with certain aspects of the present disclosure.
**FIG. 3** is a diagram conceptually illustrating an example of a first UE communicating with one or more other UEs according to aspects of the present disclosure.
**FIG. 4** is a block diagram of an example frame format for certain wireless communication systems (e.g., new radio (NR)), in accordance with certain aspects of the present disclosure.
**FIG. 5** is a schematic diagram illustrating an example model of multiple wireless devices operating in an unlicensed spectrum, in accordance with certain aspects of the present disclosure.
**FIGs. 6A** and **6B** are diagrams illustrating example cellular vehicle-to-everything (CV2X) systems, in accordance with certain aspects of the present disclosure.
**FIG. 7** is a block diagram illustrating an example transmission timeline for time-division multiplex (TDM) channel occupancy time (COT) sharing and frequency-division multiplexing (FDM) COT sharing, in accordance with certain aspects of the present disclosure.
**FIG. 8** is a diagram illustrating an example CV2X wireless communications system with a first vehicle and a second vehicle in accordance with certain aspects of the present disclosure.
**FIG. 9** is a diagram illustrating an example wireless communications system in accordance with certain aspects of the present disclosure.
**FIG. 10** is a flow diagram illustrating example operations for wireless communication by a UE, in accordance with certain aspects of the present disclosure.
**FIG. 11** illustrates a communications device that may include various components configured to perform operations for the techniques disclosed herein, in accordance with aspects of the present disclosure.
**FIG. 12** is a flow diagram illustrating example operations for wireless communication by a UE, in accordance with certain aspects of the present disclosure.
**FIG. 13** illustrates a communications device that may include various components configured to perform operations for the techniques disclosed herein, in accordance with aspects of the present disclosure.

To facilitate understanding, identical reference numerals have been used, where possible, to designate identical elements that are common to the figures. It is contemplated that elements disclosed in one aspect may be beneficially utilized on other aspects without specific recitation.

### DETAILED DESCRIPTION

Aspects of the present disclosure provide apparatus, methods, processing systems, and computer readable mediums for sharing a frequency band based on acquisition of use of the frequency band by an acquiring device for a time period (e.g., referred to as a channel occupancy time (COT)). The acquiring device may be a wireless communication device, such as a UE. In particular, certain aspects provide techniques for a UE with data to transmit (e.g., a "transmitter UE") to determine whether to use the frequency band for transmitting the data during the COT based on signal characteristics between the acquiring device and the transmitter UE (e.g., received signal strength as measured at the transmitter UE of a transmission from the acquiring device). In certain aspects, the frequency band is an unlicensed frequency band in unlicensed frequency spectrum, and the acquiring device acquires (e.g., reserves, obtains, retains, etc.) the frequency band using a listen-before-talk (LBT) procedure as further discussed. In certain aspects, such techniques are described as being performed by cellular vehicle-to-everything (CV2X) devices for sidelink communication in an unlicensed frequency band. However, it should be noted that such techniques may be similarly applicable to any suitable types of communication between any suitable types of devices in any suitable type of frequency band.

For example, in certain aspects of the present disclosure, a COT may designate an interval of time that one or more devices can transmit via a frequency band continuously before yielding the frequency band (e.g., stopping transmitting via the frequency band for a period long enough for other devices to begin transmitting via the same frequency band). In order to acquire a COT for a frequency band, a CV2X device may perform a listen-before-talk (LBT) procedure to determine that the frequency band is idle prior to transmitting during the COT. As used herein, the term "idle" means that energy as measured on the frequency band by the device (e.g., CV2X device, non-CV2X device, etc.) determining idleness is below a threshold level. As used herein, the term "busy" means that energy as measured on the frequency band by the device determining idleness is above the threshold level. Such energy may be due to noise or signals within the frequency band. Accordingly, an LBT procedure may refer to a device measuring the frequency band for idleness prior to transmitting on the frequency band. If the frequency band is busy, the device may refrain from transmitting on the frequency band, and if the frequency band is idle, the device may transmit on the frequency band.

In certain aspects, a CV2X device that performs an LBT procedure, determines the frequency band is idle, and therefore acquires use of the frequency band for the COT, may share use of the frequency band for the COT (also referred to as sharing the COT) with one or more additional CV2X devices. In certain aspects, in order for these CV2X devices to share the COT, a signal (e.g., a data signal carrying data referred to as a data signal, a reservation signal not carrying data and used just for reserving the frequency band, etc.) may need to be continuously transmitted without a gap in time by the CV2X devices. Accordingly, at any given time during the COT, at least one of the CV2X devices sharing the frequency band for the COT may be transmitting a signal. Any non-CV2X devices that may perform an LBT during the COT may find the frequency band as busy, and thus refrain from transmitting on the frequency band. As described in more detail below, in certain aspects, COT sharing may be: (i) time-division multiplexing (TDM) style COT sharing, where a COT is shared by time multiplexing CV2X signal transmissions (e.g., CV2X devices transmit signaling, one at a time over a frequency band to which the COT applies, using contiguous time resources until the COT duration is exhausted), and/or (ii) frequency-division multiplexing (FDM) style COT sharing, where a COT is shared by frequency multiplexing (e.g., CV2X devices transmit simultaneously on different subchannels of a frequency band to which the COT applies).

In certain aspects, an acquiring CV2X device that performs the LBT procedure and acquires the COT transmits signaling indicating that the acquiring CV2X device has acquired the COT. Such signaling may be referred to as an acquisition signal. Any sharing CV2X device that receives the acquisition signal, accordingly, may determine that the frequency band is available for CV2X communication during the COT. In certain aspects, a sharing CV2X device may not need to perform LBT before communicating on the frequency band during the acquired COT, as the sharing CV2X device can instead rely on the LBT procedure performed by the acquiring CV2X device to determine availability of the frequency band during the COT for CV2X communications. Certain aspects herein limit the extent to which a sharing CV2X device can rely on the LBT procedure performed by the acquiring CV2X device to determine availability of the frequency band during the COT for CV2X communications.

For example, an acquiring CV2X device and a sharing CV2X device may be separated geographically. In certain aspects, a non-CV2X device may be closer to the sharing CV2X device, and accordingly farther from the acquiring CV2X device. Accordingly, in an example scenario, the acquiring CV2X device may determine the frequency band is idle and acquire a COT, even during a time period that the non-CV2X device is using the frequency band, as the acquiring CV2X device may not detect a signal from the non-CV2X device above a threshold energy level. Were the acquiring CV2X device to transmit in the frequency band during the COT, it may not interfere with the non-CV2X device transmissions, based on the separation between the acquiring CV2X device and the non-CV2X device. However, if the sharing CV2X device were to share the COT based on receiving the acquisition signal from the acquiring CV2X device and transmit a signal, thereby extending use of the frequency band during the COT in space to the vicinity of the sharing CV2X device, the transmitted signal from the sharing CV2X device may interfere with communications of the non-CV2X device.

Thus, according to certain aspects herein, a sharing CV2X device determines whether a signal strength (e.g., received signal strength indicator (RSSI), reference signal received quality (RSRQ), or reference signal received power (RSRP)) of the acquisition signal as received by the sharing CV2X device is above a threshold. If the sharing CV2X device determines the signal strength is equal to or above the threshold it determines it can share the COT. If the sharing CV2X device determines the signal strength is below the threshold it determines it cannot share the COT. For example, the received signal strength of the acquisition signal may be indicative of the distance between the acquiring CV2X device and the sharing CV2X device, with a higher signal strength indicating closer distance, and a lower signal strength indicating greater distance. Therefore, in certain aspects, the higher the signal strength of the acquisition signal as received by the sharing CV2X device, the less the use of the frequency band is extended in space, and the potential for interference with non-CV2X devices is reduced, thereby enhancing device coexistence.

Accordingly, the techniques herein lead to improved reliability and accessibility of communications in a frequency band, by reserving a COT for communications between devices, and signaling an indication of the reserved COT. Thus, these techniques can help improve latency, by reducing the time the devices spend performing LBT before communicating over the frequency band.

An unlicensed band refers to any frequency band(s) that are not subject to licensed use under regulatory practice, such that they are open to use by any devices, and not just devices that have a license to use the particular frequency band(s).

The electromagnetic spectrum is often subdivided, based on frequency/wavelength, into various classes, bands, channels, etc. In 5G NR two initial operating bands have been identified as frequency range designations FR1 (410 megahertz (MHz) - 7.125 gigahertz (GHz)) and FR2 (24.25 GHz - 52.6 GHz). It should be understood that although a portion of FR1 is greater than 6 GHz, FR1 is often referred to (interchangeably) as a "Sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the international telecommunications union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR4a or FR4-1 (52.6 GHz - 71 GHz), FR4 (52.6 GHz - 114.25 GHz), and FR5 (114.25 GHz - 300 GHz). Each of these higher frequency bands falls within the EHF band.

With the above aspects in mind, unless specifically stated otherwise, it should be understood that the term "sub-6 GHz" or the like if used herein may broadly represent frequencies that may be less than 6 GHz, may be within FR1, or may include mid-band frequencies. Further, unless specifically stated otherwise, it should be understood that the term "millimeter wave" or the like if used herein may broadly represent frequencies that may include mid-band frequencies, may be within FR2, FR4, FR4-a or FR4-1, and/or FR5, or may be within the EHF band.

The following description provides examples of a UE transmitting a signal in an unlicensed frequency band (e.g., an unlicensed channel) during a COT for the unlicensed frequency band acquired by another UE, based on a received signal strength of a signal from the other UE in communication systems, and is not limiting of the scope, applicability, or examples set forth in the claims. Changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method which is practiced using other structure, functionality, or structure and functionality in addition to, or other than, the various aspects of the disclosure set forth herein. It should be understood that any aspect of the disclosure disclosed herein may be embodied by one or more elements of a claim. The word "exemplary" is used herein to mean "serving as an example, instance, or illustration." Any aspect described herein as "exemplary" is not necessarily to be construed as preferred or advantageous over other aspects.

In general, any number of wireless networks may be deployed in a given geographic area. Each wireless network may support a particular radio access technology (RAT) and may operate on one or more frequencies. A RAT may also be referred to as a radio technology, an air interface, etc. A frequency may also be referred to as a carrier, a subcarrier, a frequency channel, a tone, a subband or a subchannel, etc. Each frequency may support a single RAT in a given geographic area in order to avoid interference between wireless networks of different RATs.

The techniques described herein may be used for various wireless networks and radio technologies. While aspects may be described herein using terminology commonly associated with 3G, 4G, and/or new radio (e.g., 5G NR) wireless technologies, aspects of the present disclosure can be applied in other generation-based communication systems.

NR access may support various wireless communication services, such as enhanced mobile broadband (eMBB) targeting wide bandwidth (e.g., 80 MHz or beyond), millimeter wave (mmW) targeting high carrier frequency (e.g., e.g., 24 GHz to 53 GHz or beyond), massive machine type communications MTC (mMTC) targeting non-backward compatible MTC techniques, and/or mission critical targeting ultra-reliable low-latency communications (URLLC). These services may include latency and reliability requirements. These services may also have different transmission time intervals (TTI) to meet respective quality of service (QoS) requirements. In addition, these services may co-exist in the same subframe. NR supports beamforming and beam direction may be dynamically configured. MIMO transmissions with precoding may also be supported. MIMO configurations in the DL may support up to 8 transmit antennas with multi-layer DL transmissions up to 8 streams and up to 2 streams per UE. Multi-layer transmissions with up to 2 streams per UE may be supported. Aggregation of multiple cells may be supported with up to 8 serving cells.

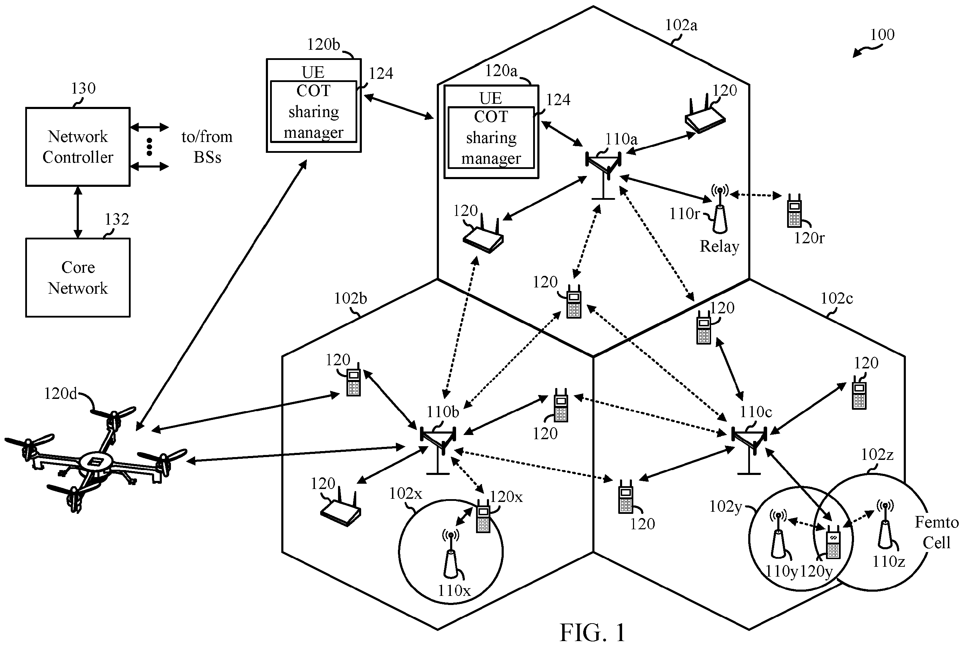

**FIG. 1** illustrates an example wireless communication network 100 in which aspects of the present disclosure may be performed. For example, the wireless communication network 100 may be an NR system (e.g., a 5G NR network). As shown in **FIG. 1****,** the wireless communication network 100 may be in communication with a core network 132. The core network 132 may in communication with one or more base station (BSs) 110 and/or user equipment (UE) 120 in the wireless communication network 100 via one or more interfaces.

According to certain aspects, the UEs 120 may be configured for a UE to transmit a signal in a (e.g., unlicensed) frequency band (e.g., an unlicensed channel) during a COT for the frequency band acquired by another UE, based on a received signal strength of a signal from the other UE. As shown in **FIG. 1****,** the UE 120a includes a COT sharing manager 124 that receives a first transmission from another UE (e.g., UE 120b), the first transmission indicating the other UE has acquired a frequency band for a COT; measures a signal strength of the first transmission as received by the UE; and when the measured signal strength is greater than at least one threshold, transmits a signal within the frequency band during the COT, in accordance with aspects of the present disclosure. The UE 120b also includes a COT sharing manager 124 that receives a first transmission from another UE (e.g., UE 120a), the first transmission indicating the other UE has acquired a frequency band for a channel occupancy time (COT); measures a signal strength of the first transmission as received by the UE; and when the measured signal strength is greater than at least one threshold, transmits a signal within the frequency band during the COT, in accordance with aspects of the present disclosure.

In certain aspects, the COT sharing manager 124 is configured to receive a first transmission from a second UE, the first transmission indicating the second UE has acquired a frequency band for a COT. The COT sharing manager 124 may also be configured to transmit a signal within the frequency band during the COT in response to a signal strength of the first transmission as received by the first UE being greater than at least one threshold.

As illustrated in **FIG. 1****,** the wireless communication network 100 may include a number of BSs 110a-z (each also individually referred to herein as BS 110 or collectively as BSs 110) and other network entities. A BS 110 may provide communication coverage for a particular geographic area, sometimes referred to as a "cell", which may be stationary or may move according to the location of a mobile BS 110. In some examples, the BSs 110 may be interconnected to one another and/or to one or more other BSs or network nodes (not shown) in wireless communication network 100 through various types of backhaul interfaces (e.g., a direct physical connection, a wireless connection, a virtual network, or the like) using any suitable transport network. In the example shown in **FIG. 1****,** the BSs 110a, 110b and 110c may be macro BSs for the macro cells 102a, 102b and 102c, respectively. The BS 110x may be a pico BS for a pico cell 102x. The BSs 110y and 110z may be femto BSs for the femto cells 102y and 102z, respectively. A BS may support one or multiple cells.

The BSs 110 communicate with UEs 120a-y (each also individually referred to herein as UE 120 or collectively as UEs 120) in the wireless communication network 100. The UEs 120 (e.g., 120x, 120y, etc.) may be dispersed throughout the wireless communication network 100, and each UE 120 may be stationary or mobile. In one example, a quadcopter, drone, or any other unmanned aerial vehicle (UAV) or remotely piloted aerial system (RPAS) 120d may be configured to function as a UE. Wireless communication network 100 may also include relay stations (e.g., relay station 110r), also referred to as relays or the like, that receive a transmission of data and/or other information from an upstream station (e.g., a BS 110a or a UE 120r) and sends a transmission of the data and/or other information to a downstream station (e.g., a UE 120 or a BS 110), or that relays transmissions between UEs 120, to facilitate communication between devices.

A network controller 130 may be in communication with a set of BSs 110 and provide coordination and control for these BSs no (e.g., via a backhaul). In aspects, the network controller 130 may be in communication with a core network 132 (e.g., a 5G Core Network (5GC)), which provides various network functions such as Access and Mobility Management, Session Management, User Plane Function, Policy Control Function, Authentication Server Function, Unified Data Management, Application Function, Network Exposure Function, Network Repository Function, Network Slice Selection Function, etc.

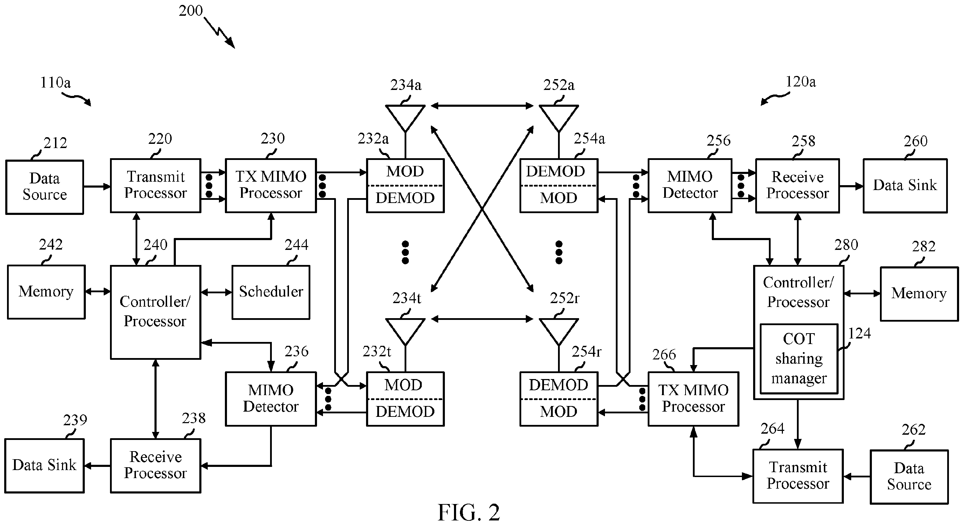

**FIG. 2** illustrates example components 200 of BS 110a and UE 120a (e.g., the wireless communication network 100 of **FIG. 1**), which may be used to implement aspects of the present disclosure.

At the BS 110a, a transmit processor 220 may receive data from a data source 212 and control information from a controller/processor 240. The control information may be for the physical broadcast channel (PBCH), physical control format indicator channel (PCFICH), physical hybrid automatic repeat request (HARQ) indicator channel (PHICH), physical downlink control channel (PDCCH), group common PDCCH (GC PDCCH), etc. The data may be for the physical downlink shared channel (PDSCH), etc. A medium access control (MAC)-control element (MAC-CE) is a MAC layer communication structure that may be used for control command exchange between wireless nodes. The MAC-CE may be carried in a shared channel such as a physical downlink shared channel (PDSCH), a physical uplink shared channel (PUSCH), or a physical sidelink shared channel (PSSCH).

The processor 220 may process (e.g., encode and symbol map) the data and control information to obtain data symbols and control symbols, respectively. The transmit processor 220 may also generate reference symbols, such as for the primary synchronization signal (PSS), secondary synchronization signal (SSS), PBCH demodulation reference signal (DMRS), and channel state information reference signal (CSI-RS). A transmit (TX) multiple-input multiple-output (MIMO) processor 230 may perform spatial processing (e.g., precoding) on the data symbols, the control symbols, and/or the reference symbols, if applicable, and may provide output symbol streams to the modulators (MODs) 232a-232t. Each modulator 232 may process a respective output symbol stream (e.g., for OFDM, etc.) to obtain an output sample stream. Each modulator may further process (e.g., convert to analog, amplify, filter, and upconvert) the output sample stream to obtain a downlink signal. Downlink signals from modulators 232a-232t may be transmitted via the antennas 234a-234t, respectively.

At the UE 120a, the antennas 252a-252r may receive the downlink signals from the BS 110a and may provide received signals to the demodulators (DEMODs) in transceivers 254a-254r, respectively. Each demodulator 254 may condition (e.g., filter, amplify, downconvert, and digitize) a respective received signal to obtain input samples. Each demodulator may further process the input samples (e.g., for OFDM, etc.) to obtain received symbols. A MIMO detector 256 may obtain received symbols from all the demodulators 254a-254r, perform MIMO detection on the received symbols if applicable, and provide detected symbols. A receive processor 258 may process (e.g., demodulate, deinterleave, and decode) the detected symbols, provide decoded data for the UE 120a to a data sink 260, and provide decoded control information to a controller/processor 280.

On the uplink, at UE 120a, a transmit processor 264 may receive and process data (e.g., for the physical uplink shared channel (PUSCH)) from a data source 262 and control information (e.g., for the physical uplink control channel (PUCCH) from the controller/processor 280. The transmit processor 264 may also generate reference symbols for a reference signal (e.g., for the sounding reference signal (SRS)). The symbols from the transmit processor 264 may be precoded by a TX MIMO processor 266 if applicable, further processed by the modulators in transceivers 254a-254r (e.g., for SC-FDM, etc.), and transmitted to the BS 110a. At the BS 110a, the uplink signals from the UE 120a may be received by the antennas 234, processed by the modulators 232, detected by a MIMO detector 236 if applicable, and further processed by a receive processor 238 to obtain decoded data and control information sent by the UE 120a. The receive processor 238 may provide the decoded data to a data sink 239 and the decoded control information to the controller/processor 240.

The memories 242 and 282 may store data and program codes for BS 110a and UE 120a, respectively. A scheduler 244 may schedule UEs for data transmission on the downlink and/or uplink.

Antennas 252, processors 266, 258, 264, and/or controller/processor 280 of the UE 120a and/or antennas 234, processors 220, 230, 238, and/or controller/processor 240 of the BS 110a may be used to perform the various techniques and methods described herein. For example, as shown in **FIG. 2****,** the controller/processor 280 of the UE 120a has a COT sharing manager 124 that receives a first transmission from another UE (e.g., UE 120b), the first transmission indicating the other UE has acquired a frequency band for a COT; measures a signal strength of the first transmission as received by the UE; and when the measured signal strength is greater than at least one threshold, transmits a signal within the frequency band during the COT, according to aspects described herein. Although shown at the controller/processor, other components of the UE 120a and BS 110a may be used to perform the operations described herein.

In certain aspects, the COT sharing manager 124 is configured to receive a first transmission from a second UE, the first transmission indicating the second UE has acquired a frequency band for a COT. The COT sharing manager 124 may also be configured to transmit a signal within the frequency band during the COT in response to a signal strength of the first transmission as received by the first UE being greater than at least one threshold.

NR may utilize orthogonal frequency division multiplexing (OFDM) with a cyclic prefix (CP) on the uplink and downlink. NR may support half-duplex operation using time division duplexing (TDD). OFDM and single-carrier frequency division multiplexing (SC-FDM) partition the system bandwidth into multiple orthogonal subcarriers, which are also commonly referred to as tones, bins, etc. Each subcarrier may be modulated with data. Modulation symbols may be sent in the frequency domain with OFDM and in the time domain with SC-FDM. The spacing between adjacent subcarriers may be fixed, and the total number of subcarriers may be dependent on the system bandwidth. The minimum resource allocation, called a resource block (RB), may be 12 consecutive subcarriers. The system bandwidth may also be partitioned into subbands. For example, a subband may cover multiple RBs. NR may support a base subcarrier spacing (SCS) of 15 KHz and other SCS may be defined with respect to the base SCS (e.g., 30 kHz, 60 kHz, 120 kHz, 240 kHz, etc.).

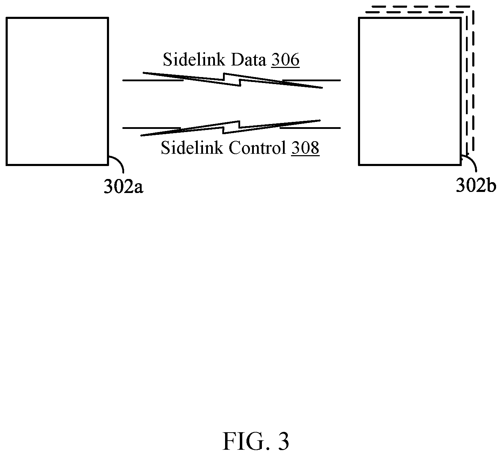

**FIG. 3** is a diagram conceptually illustrating a sidelink communication between a first UE 302a and one or more second UEs 302b (collectively, "UEs 302"). In various examples, any one of the first UE 302a and the second UE 302b may correspond to a UE (e.g., UE 120a or UE 120b of **FIGs. 1** and **2**) or other suitable node in the wireless communication network 100.

In some examples, the first UE 302a and the second UE 302b may utilize sidelink signals for direct (device-to-device) D2D communication. The D2D communication may use the downlink/uplink wireless wide area network (WWAN) spectrum and/or an unlicensed spectrum. The D2D communication may use one or more sidelink channels, such as a physical sidelink broadcast channel (PSBCH), a physical sidelink discovery channel (PSDCH), a physical sidelink shared channel (PSSCH), and a physical sidelink control channel (PSCCH) over these spectrums. D2D communication may be through a variety of wireless D2D communications systems, such as for example, FlashLinQ, WiMedia, Bluetooth, ZigBee, Wi-Fi based on the institute of electrical and electronic engineers (IEEE) 802.11 standard, LTE, or NR.

Sidelink signals may include sidelink data 306 (i.e., sidelink traffic) and sidelink control information 308. Broadly, the first UE 302a and one or more second UEs 302b may communicate sidelink data 306 and sidelink control information 308 using one or more data channels and control channels. In some aspects, data channels include the PSSCH, and control channels include the PSCCH and/or physical sidelink feedback channel (PSFCH).

Sidelink control information 308 may include a source transmit signal (STS), a direction selection signal (DSS), and a destination receive signal (DRS). The DSS/STS may provide for a UE 302 (e.g., 302a, 302b) to request a duration of time to keep a sidelink channel available for a sidelink signal; and the DRS may provide for the UE 302 to indicate the availability of the sidelink channel, e.g., for a requested duration of time. Accordingly, the first UE 302a and the second UE 302b may negotiate the availability and use of sidelink channel resources prior to communication of sidelink data 306 information.

In some configurations, any one or more of the first UE 302a or the second UE 302b may periodically/aperiodically transmit or broadcast sidelink synchronization signaling to increase chances of detection by another UE or BS. For example, one or more of the first UE 302a and the second UE 302b may periodically/aperiodically transmit sidelink synchronization signals in one or more slots of specific time windows. In some examples, the UEs are configured with information indicating the location and duration of the time window within a frame (e.g., which slots within the frame, and how many). In some aspects, the UEs may be configured with the location and duration of the time window via messaging between UEs or messaging received from a BS (e.g., radio resource control (RRC) signaling).

The channels or carriers illustrated in **FIG. 3** are not necessarily all of the channels or carriers that may be utilized between a first UE 302a and a second UE 302b in a sidelink communication, and those of ordinary skill in the art will recognize that other channels or carriers may be utilized in addition to those illustrated, such as other data, control, and feedback channels.

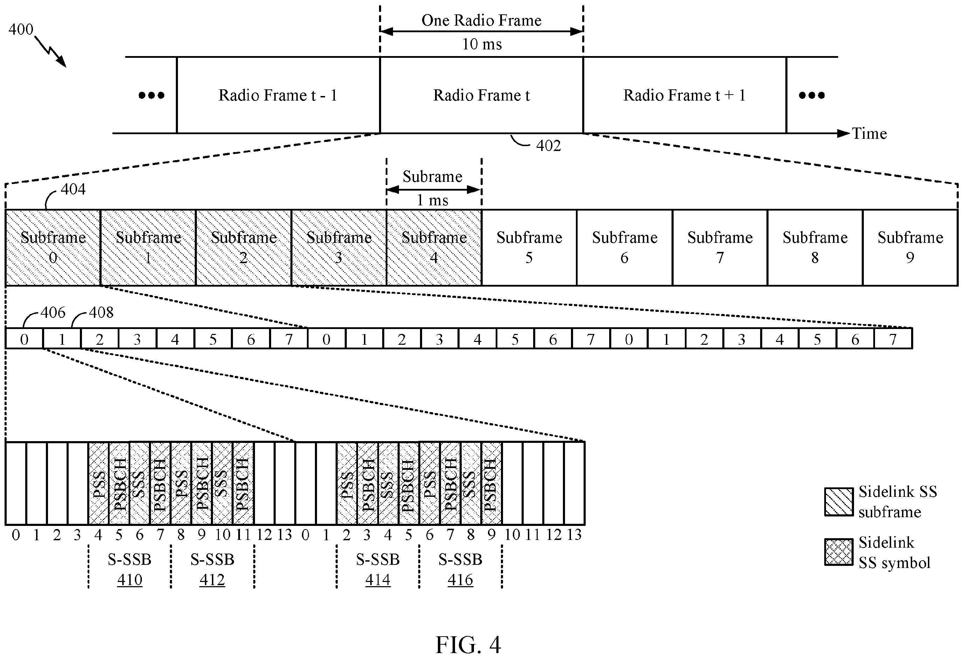

**FIG. 4** is a diagram showing an example of a frame format 400. The transmission timeline for each data transmission and reception may be partitioned into units of radio frames 402. In NR, the basic transmission time interval (TTI) may be referred to as a slot. In NR, a subframe may contain a variable number of slots (e.g., 1, 2, 4, 8, 16, ..., N slots) depending on the subcarrier spacing (SCS). NR may support a base SCS of 15 KHz and other SCS may be defined with respect to the base SCS (e.g., 30 kHz, 60 kHz, 120 kHz, 240 kHz, etc.). In the example shown in **FIG. 4****,** the SCS is 120 kHz. As shown in **FIG. 4****,** the subframe 404 (subframe 0) contains 8 slots (slots 0, 1, ..., 7) with a 0.125 ms duration. The symbol and slot lengths scale with the subcarrier spacing. Each slot may include a variable number of symbol (e.g., OFDM symbols) periods (e.g., 7 or 14 symbols) depending on the SCS. For the 120 kHz SCS shown in **FIG. 4****,** each of the slot 406 (slot 0) and slot 408 (slot 1) includes 14 symbol periods (slots with indices 0, 1, ..., 13) with a 0.25 ms duration.

In sidelink, a sidelink synchronization signal block (S-SSB), referred to as the SS block or SSB, is transmitted. The SSB may include a primary SS (PSS), a secondary SS (SSS), and/or a two symbol physical sidelink broadcast channel (PSBCH). In some examples, the SSB can be transmitted up to sixty-four times with up to sixty-four different beam directions. The up to sixty-four transmissions of the SSB are referred to as the SS burst set. SSBs in an SS burst set may be transmitted in the same frequency region, while SSBs in different SS bursts sets can be transmitted in different frequency regions.

In the example shown in **FIG. 4****,** in the subframe 404, SSB is transmitted in each of the slots (slots 0, 1, ..., 7). In the example shown in **FIG. 4****,** in the slot 406 (slot 0), an SSB 410 is transmitted in the symbols 4, 5, 6, 7 and an SSB 412 is transmitted in the symbols 8, 9, 10, 11, and in the slot 408 (slot 1), an SSB 414 is transmitted in the symbols 2, 3, 4, 5 and an SSB 416 is transmitted in the symbols 6, 7, 8, 9, and so on. The SSB may include a primary SS (PSS), a secondary (SSS), and a two symbol physical sidelink broadcast channel (PSBCH). The PSS and SSS may be used by UEs to establish sidelink communication (e.g., transmission and/or reception of data and/or control channels). The PSS may provide half-frame timing, the SS may provide cyclic prefix (CP) length and frame timing. The PSBCH carries some basic system information, such as system bandwidth, timing information within radio frame, SS burst set periodicity, system frame number, etc. The SSBs may be organized into SS bursts to support beam sweeping. Further system information such as, remaining minimum system information (RMSI), system information blocks (SIBs), and other system information (OSI) can be transmitted on a physical sidelink shared channel (PSSCH) in certain subframes.

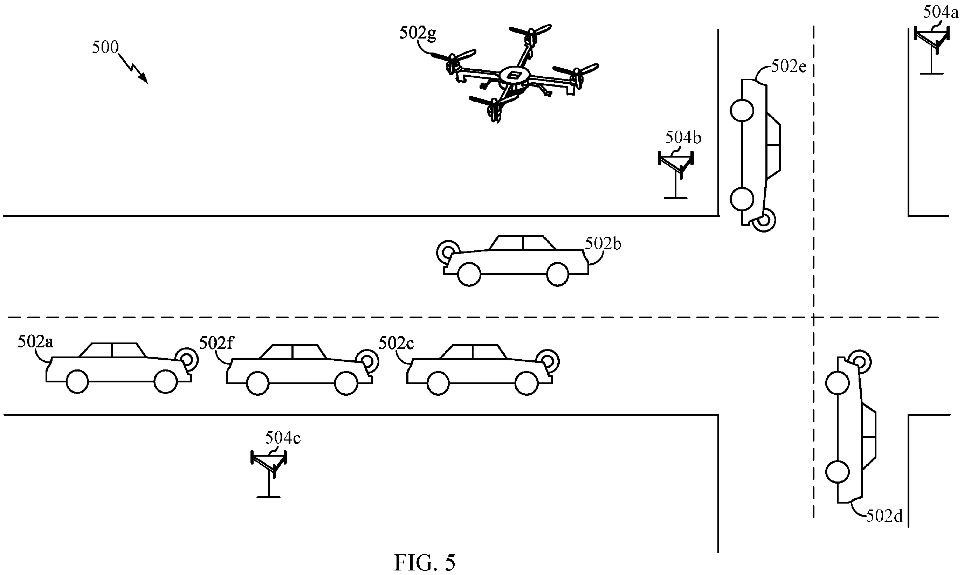

**FIG. 5** is a schematic diagram illustrating an example network 500 of multiple CV2X devices operating in an unlicensed spectrum. In the illustrated example, seven CV2X devices (e.g., a first CV2X device 502a, a second CV2X device 502b, a third CV2X device 502c, a fourth CV2X device 502d, a fifth CV2X device 502e, a sixth CV2X device 502f, and a seventh CV2X device 502g) - collectively referred to as CV2X devices 502) may operate in an unlicensed spectrum with other non-CV2X devices (e.g., non-CV2X devices 504a-504c - collectively referred to as non-CV2X devices 504).

In some examples, the first CV2X device 502a, the sixth CV2X device 502f, and the third CV2X device 502c may be part of a fleet. Although the example provided is illustrative of six automotive CV2X devices in a traffic setting and a drone or other aerial vehicle CV2X device, it can be appreciated that CV2X devices and environments may extend beyond these, and include other wireless communication devices and environments. For example, the CV2X devices 502 may include devices on motorcycles, or carried by users (e.g., pedestrian, bicyclist, etc.), and other environments may include indoor environments such as offices, residential, or urban infrastructure (e.g., subways, trains, etc.) environments. The CV2X devices 502 may also include UEs (e.g., UE 120 of FIG. 1) and/or RSUs (which may be a type of UE) operated by a highway authority, and may be devices implemented on motorcycles or carried by users (e.g., pedestrian, bicyclist, etc.), or may be implemented on another aerial vehicle such as a helicopter or drone

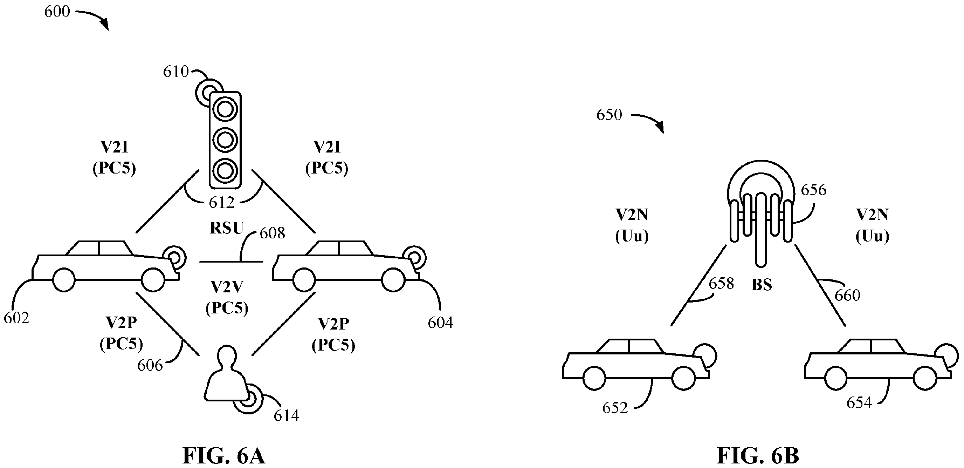

**FIGs. 6A** and **6B** are diagrams illustrating diagrammatic representations of example CV2X and/or vehicle-to-everything (V2X) systems, in accordance with some aspects of the present disclosure. For example, the vehicles shown in **FIG. 6A** and **FIG. 6B** may communicate via sidelink channels and may relay sidelink transmissions as described herein. Although discussed in terms of CV2X, the systems illustrated may also apply to other V2X communications (e.g., vehicle-to-pedestrian (V2P), vehicle-to-infrastructure (V2I), vehicle-to-network (V2N), vehicle-to-vehicle (V2V), vehicle-to-device (V2D), vehicle-to-grid (V2G), and any other suitable communication modes).

The CV2X systems, provided in **FIG. 6A** and **FIG. 6B** provide two complementary transmission modes. A first transmission mode shown by way of example in **FIG. 6A****,** involves direct sidelink communications between participants in proximity to one another in a local area. A second transmission mode, shown by way of example in **FIG. 6B****,** involves network communications through a network, which may be implemented over a Uu interface (e.g., a wireless communication interface between a radio access network (RAN) and a UE).

Referring to **FIG. 6A****,** a CV2X system 600 is illustrated with a first vehicle 602 and a second vehicle 604. The first transmission mode allows for direct communication between different participants in a given geographic location. As illustrated, a vehicle can have a wireless communication link 606 with an individual 614 (e.g., via a UE) through a PC5 interface. Communications between the first vehicle 602 and the second vehicle 604 may also occur through a PC5 interface 608. In a like manner, communication may occur from the first vehicle 602 to other highway components (e.g., a roadside unit (RSU) or highway component 610), such as a traffic signal or sign through a PC5 interface 612.

With respect to each communication link illustrated in **FIG. 6A****,** two-way communication may take place between elements, therefore each element may be a transmitter and a receiver of information. The CV2X system 600 may be a self-managed system implemented without assistance from a network entity. A self-managed system may enable improved spectral efficiency, reduced cost, and increased reliability as network service interruptions do not occur during handover operations for moving vehicles. The CV2X system may be configured to operate in a licensed or unlicensed spectrum, thus any vehicle with an equipped system may access a common frequency and share information.

**FIG. 6B** shows a CV2X system 650 for communication between a first vehicle 652 and a second vehicle 654 through a network entity (e.g., BS 656). These network communications may occur through discrete nodes, such as a BS (e.g., BS 110a), an RSU, or another UE (e.g., UE 120a for FIG. 1), that receives information from and transmits information to (e.g., relays information between) the first vehicle 652 and the second vehicle 654. The BS 656 may also schedule resources for communication between the first vehicle 652 and the second vehicle 654. Network communications through vehicle to network (V2N) links (658 and 660) may be used, for example, for long range communications between vehicles, such as for communicating the presence of a car accident a distance ahead along a road or highway. Other types of communications may be sent by the wireless node to vehicles, such as traffic flow conditions, road hazard warnings, environmental/weather reports, and service station availability, among other examples. Such data can be obtained from cloud-based sharing services.

An RSU may be used for V2I communications. In some examples, an RSU may act as a forwarding node to extend coverage for a UE. In some examples, an RSU may be co-located with a BS or may be standalone. RSUs can have different classifications. For example, RSUs can be classified into UE-type RSUs and Micro NodeB-type RSUs. Micro NB-type RSUs have similar functionality as the Macro eNB/gNB. The Micro NB-type RSUs can utilize the Uu interface. UE-type RSUs can be used for meeting tight quality-of-service (QoS) requirements by minimizing collisions and improving reliability. UE-type RSUs may use centralized resource allocation mechanisms to allow for efficient resource utilization. Critical information (e.g., such as traffic conditions, weather conditions, congestion statistics, sensor data, etc.) can be broadcast to UEs in the coverage area. Relays can re-broadcasts critical information received from some UEs. UE-type RSUs may be a reliable synchronization source.

As discussed, certain aspects herein provide techniques for sharing of a COT of a frequency band between CV2X devices. In certain aspects, COT sharing may be: (i) time-division multiplexing (TDM) style COT sharing, where a COT is shared by time multiplexing CV2X signal transmissions (e.g., CV2X devices transmit signaling, one at a time over a frequency band to which the COT applies, using contiguous time resources until the COT duration is exhausted), and/or (ii) frequency-division multiplexing (FDM) style COT sharing, where a COT is shared by frequency multiplexing (e.g., CV2X devices transmit simultaneously on different subchannels of a frequency band to which the COT applies).

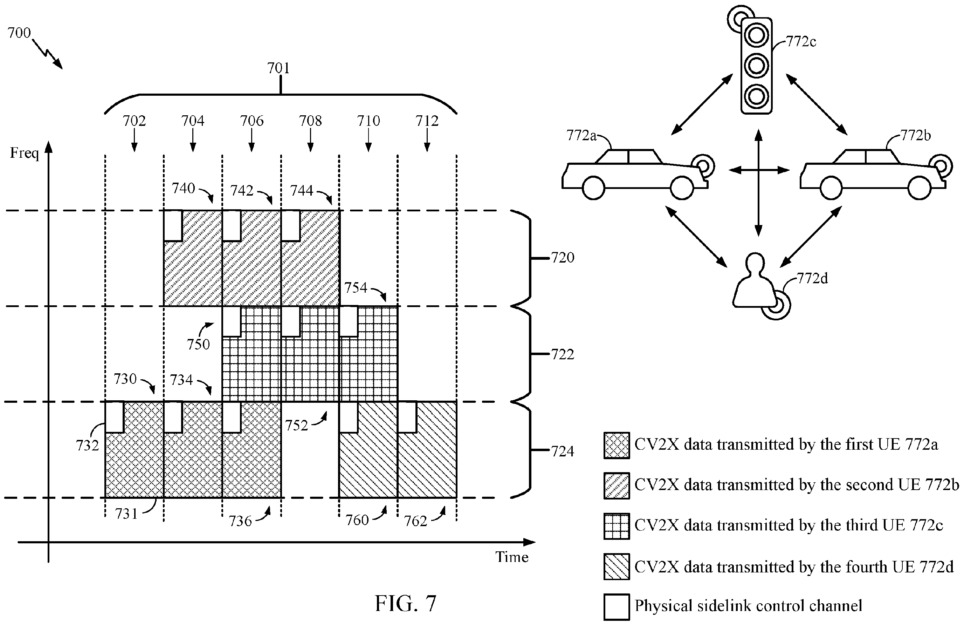

**FIG. 7** is a block diagram illustrating an example transmission timeline 700 illustrating time-division multiplexing (TDM) channel occupancy time (COT) sharing and frequency-division multiplexing (FDM) COT sharing, in accordance with aspects of the present disclosure. As illustrated, communications in FIG. 7 may be performed by four CV2X devices: a first CV2X device 772a, a second CV2X device 772b, a third CV2X device 772c, and a fourth CV2X device 772d. It should be noted that four CV2X devices are discussed for ease of explanation, and that that any suitable number of CV2X devices may perform COT sharing. Further, though different depictions of CV2X devices are shown for CV2X devices, any suitable type of devices may perform COT sharing. In the example transmission timeline, the first CV2X device 772a (e.g., the UE 120a of **FIGs. 1** **and** **2****,** the first UE 302a of **FIG. 3****,** the first CV2X device 502a of **FIG. 5****,** the first vehicle 602 of **FIG. 6****,** etc.) performs an LBT procedure and acquires a COT 701 that includes a plurality of contiguous symbols (e.g., a first symbol 702, a second symbol 704, a third symbol 706, a fourth symbol 708, a fifth symbol 710, and a sixth symbol 712) of a first subchannel 720, a second subchannel 722, and a third subchannel 724 of an unlicensed frequency band. Though the COT 701 is shown as including 6 symbols, it should be understood that the COT 701 may include any suitable number of symbols or other types of time periods.

Here, the first CV2X device 772a sends a first transmission 730 on the third subchannel 724 during the first symbol 702. The first transmission 730 includes control information 732 (e.g., a physical sidelink control channel (PSCCH)) and CV2X data 731. The first CV2X device 772a also sends a second transmission 734 and a third transmission 736 on the third subchannel 724 during the second symbol 704 and the third symbol 706, respectively. In the example transmission timeline 700, the second CV2X device 772b (e.g., the UE 120b of **FIG. 1****,** the second UE 302b of **FIG. 3****,** the second CV2X device 502b of **FIG. 5****,** the second vehicle 604 of **FIG. 6A****,** etc.) determines (e.g., based on decoding the control channel information 732) that the second CV2X device 772b can send a fourth transmission 740 on the first subchannel 720 during the second symbol 704 without performing LBT. That is, the second CV2X device 772b determines to share the COT acquired by the first CV2X device 772a, such as indicated in the control channel information 732.

By sending the fourth transmission 740 on a different subchannel (e.g., the first subchannel 720) while the first CV2X device 772a is sending the second transmission 734 on the third subchannel 724, the second CV2X device 772b is performing FDM COT sharing, or sharing the COT in an FDM manner (e.g., the second CV2X device 772b transmits in the first subchannel 720 separate from the third subchannel 724 used by the first CV2X device 772a, thus, the transmissions of the first CV2X device 772a and the second CV2X device 772b are frequency divided in an FDM manner while using the same time resources (second symbol 704 and the third symbol 706)). The different transmissions over the different subchannels may indicate to other UEs that a COT has been established over the unlicensed frequency band that includes the first subchannel 720, the second subchannel 722, and the third subchannel 724. In some examples, the other UEs may assume, based on the transmissions of the first CV2X device 772a and the second CV2X device 772b, that any frequency subchannels between the first subchannel 720 and the third subchannel 724 (e.g., the second subchannel 722) are also available for communication during the COT. The second UE may also send a fifth transmission 742 and a sixth transmission 744 on the first subchannel 720 during the third symbol 706 and fourth symbol 708, respectively. The fifth transmission 742 and the sixth transmission 744 may be transmitted based on the decoded control channel information 732 of the first transmission 730, or based on any control channel information (not shown) received by the second CV2X device 772b prior to the fifth transmission 742 and the sixth transmission 744.

In the example transmission timeline 700, the third CV2X device 772c (e.g., UE 120r of **FIG. 1****,** the third CV2X device 502c of **FIG. 5****,** etc.) determines, such as based on decoding the control channel information 732 of the first transmission 730, or the control channels of any of the second transmission 734 and/or fourth transmission 740, that the third CV2X device 772c can send a seventh transmission 750 on the second subchannel 722 during the third symbol 706 without performing LBT for example because the control channel information indicates the COT 701 can be shared. That is, the third CV2X device 772c may determine to share the COT 701 acquired by the first CV2X device 772a. By sending the seventh transmission 750 on the second subchannel 722 while the first CV2X device 772a is sending the third transmission 736 and the second CV2X device 772b is sending the fifth transmission 742, the third CV2X device 772c is performing FDM COT sharing, or sharing the COT in an FDM manner with both the first CV2X device 772a and the second CV2X device 772b. The third CV2X device 772c also sends an eighth transmission 752 and a ninth transmission 754 on the second subchannel 722 during the fourth symbol 708 and the fifth symbol 710, respectively.

In the example transmission timeline 700, the fourth CV2X device 772d (e.g., UE 120d, shown in **FIG. 1****,** device 502g of **FIG. 5****,** etc.) may decode the control channel of any previous transmission from the first CV2X device 772a, the second CV2X device 772b, and/or the third CV2X device 772c. Based on the decoding, the fourth CV2X device 772d may determine to send a tenth transmission 760 on the third subchannel 724 during the fifth symbol 710 without performing LBT for example because the control channel information indicates the COT 701 can be shared. That is, the fourth CV2X device 772b may determine to share the COT 701 acquired by the first CV2X device 772a. The fourth CV2X device 772d also sends an eleventh transmission 762 on the third subchannel 724 during the sixth symbol 712. By sending the tenth transmission 760 while the third CV2X device 772c is sending the eighth transmission 752, the fourth CV2X device 772d is performing FDM COT sharing with the third CV2X device 772c, or sharing the COT in an FDM manner with the third CV2X device 772c.

By sending the tenth transmission 760 and the eleventh transmission 762 on the third subchannel 724 after the first CV2X device 772a transmits on the third subchannel 724, the fourth CV2X device 772d is performing TDM COT sharing, or sharing the COT in a TDM manner with the first CV2X device 772a because it is time dividing the third subchannel 724 according to subsequent symbols. Accordingly, such chains of communications by CV2X devices 772 may extend the sharing of the COT in space, as discussed.

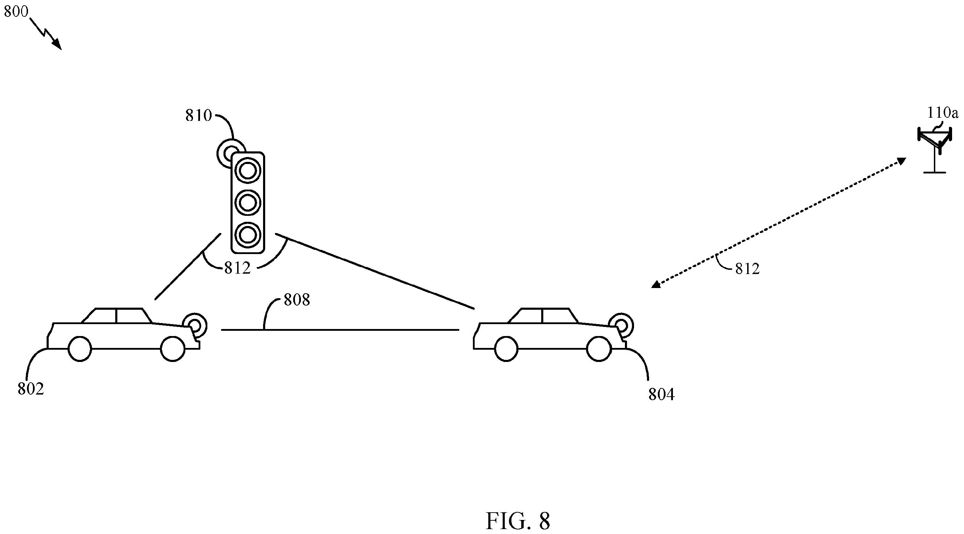

**FIG. 8** is a diagram illustrating an example CV2X wireless communications system 800 with a first vehicle 802 and a second vehicle 804 (e.g., a first UE 120a and a second UE 120b of **FIGs. 1** and **2****,** a first CV2X device 502a and a second CV2X device 502b of **FIG. 5****,** or a first UE 602/652 and a second UE 604/654 of **FIGs. 6A** and **6B****).** **FIG. 8** illustrates an example of a sharing of a COT being "extended in space" as discussed. In this example, the first vehicle 802 and the second vehicle 804 may communicate with each other over a direct link 808 or via an indirect link 812 through a highway component 810.

For example, in certain aspects, the first vehicle 802 acquires a COT (e.g., by performing LBT) for an unlicensed frequency band. The second vehicle 804 shares the COT acquired by the first vehicle 802, then transmits signaling on the unlicensed frequency band without performing LBT on the unlicensed frequency band. The signaling may be sensed as interference from the perspective of the BS (e.g., BS 110a of **FIG. 1****,** BS 504 of **FIG. 5****,** or BS 656 of **FIG. 6B**). For example, any signals transmitted by the first vehicle 802 that would otherwise reserve the frequency band may not be received by the BS 110a due to a geographic distance or interfering structure. Accordingly, from the perspective of the BS 110a, the first vehicle 802 never acquired the COT.

Thus, in certain aspects, techniques for a second UE (e.g., the second vehicle 804) to transmit a signal in a frequency band during a COT acquired by a first UE (e.g., the first vehicle 802) based on a received signal strength of a signal transmitted by the first UE as measured at the second UE may reduce or eliminate interference caused by the second UE from the perspective of a non-CV2X device (e.g., the BS 110a). The techniques may also prevent the second UE from experiencing interference from the other non-CV2X device because the second UE may not begin transmitting while the other non-CV2X device is transmitting.

### Example Channel Occupancy Time Sharing Based on Received Signal Strength

Aspects of the present disclosure provide for a determination, by a sharing user equipment (UE), of whether to transmit a signal in a frequency band during a COT for the frequency band acquired by an acquiring UE. In some examples, the determination may be based on whether a received signal strength of a signal from the acquiring UE is greater than or equal to a threshold. For example, a sharing UE may share a COT acquired by an acquiring UE after measuring a received signal strength of a signal from the acquiring UE as being greater than or equal to a threshold.

Thus, in certain aspects, a sharing UE may determine it can join a COT (e.g., by transmitting during the COT without performing LBT) initiated by an acquiring UE when the sharing UE measures a signal (e.g., indicating acquisition of the COT) as having a signal strength as received by the sharing UE above a threshold. The sharing UE may determine it cannot join the COT when the sharing UE measures the signal as having the signal strength below the threshold.

In certain aspects, a UE may have different received signal strength thresholds for each of FDM style COT sharing and TDM style COT sharing. For example, a non-CV2X device may be unable to share the unlicensed frequency band with CV2X devices via FDM, and thus, the non-CV2X device may refrain from transmitting during the COT regardless of whether one or more CV2X devices communicate via FDM. In another example, communication between CV2X devices via TDM may result in the COT be extended in time relative to the FDM COT. For example, the non-CV2X device may refrain from transmitting for a longer period of time (e.g., the duration of the TDM COT). Thus, different signal strength thresholds may provide flexibility in choosing a balance of effect on non-CV2X devices.

According to aspects of the present disclosure, received signal strength thresholds may be defined according to dBM or dB, or in power (e.g., watts). In some examples, the FDM signal strength threshold may be lower than the TDM signal strength threshold. The following describes how such signal strength thresholds may be used to determine whether or not to perform COT sharing at a CV2X device.

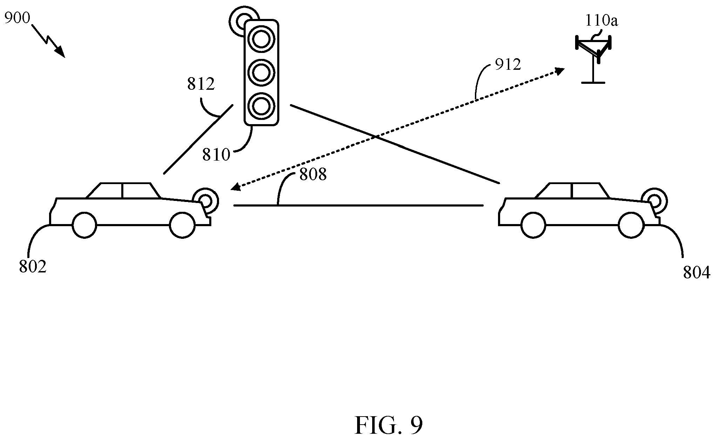

**FIG. 9** is a diagram illustrating an example wireless communications system 900. In this example, the first vehicle 802 and the second vehicle 804 may communicate with each other over a direct link 808 or via an indirect link 812 through a highway component 810.

In this example, the first vehicle 802 performs an LBT procedure, determines that the frequency band is idle, then acquires a COT for the frequency band by transmitting a signal over an indirect link 812 or direct link 808. The second vehicle 804 receives the signal transmitted from the first vehicle 802 and measures a strength of the signal (e.g., RSSI, RSRQ, or RSRP) as received. The second vehicle 804 may determine whether the signal strength is greater than or equal to a threshold. If the signal strength is greater than or equal to the threshold, the second vehicle 804 may share the COT acquired by the first vehicle 802. Accordingly, the second vehicle 804 may transmit signaling on the unlicensed frequency band without performing LBT. In this example, the signaling from the first vehicle 802 may be sensed by BS 110a as interference 912 because the BS 110a is relatively close to the first vehicle 802. Accordingly, the BS 110a may determine that the frequency band is occupied, and may refrain from transmitting.

If the signal strength is less than the threshold, the second vehicle 804 may refrain from communicating during the COT acquired by the first vehicle 802. In this example, the second vehicle 804 may determine that the BS 110a may not sense the signaling from the first vehicle 802, and therefore the second vehicle 804 does not transmit over the frequency band. Further, the BS 110a may not sense the signaling from the first vehicle 802 when performing an LBT, and thus may transmit during the COT acquired by the first vehicle 802. In this way, the second vehicle 804 may sacrifices an opportunity to transmit to reduce the chance of the second vehicle 804 causing interference to the BS 110a.

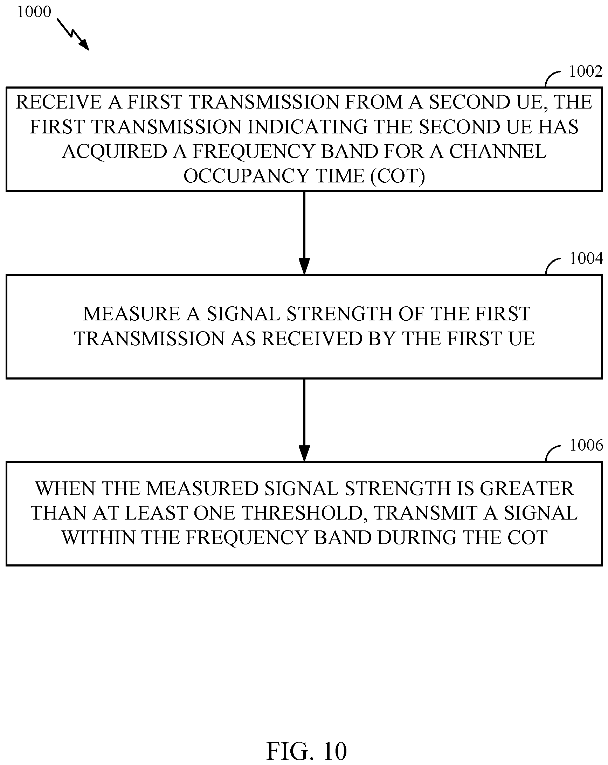

**FIG. 10** is a flow diagram illustrating example operations 1000 for wireless communication, in accordance with certain aspects of the present disclosure. The operations 1000 may be performed, for example, by a first UE (e.g., the UE 120a in the wireless communication network 100 of **FIG. 1**). The operations 1000 may be implemented as software components that are executed and run on one or more processors (e.g., controller/processor 280 of **FIG. 2**). Further, the transmission and reception of signals by the UE in operations 1000 may be enabled, for example, by one or more antennas (e.g., antennas 252 of **FIG. 2**). In certain aspects, the transmission and/or reception of signals by the UE may be implemented via a bus interface of one or more processors (e.g., controller/processor 280) obtaining and/or outputting signals.

The operations 1000 may begin, at a first block 1002, by receiving a first transmission from a second UE, the first transmission indicating the second UE has acquired a frequency band for a channel occupancy time (COT).

At a second block 1004, operations 1000 may continue by measuring a signal strength of the first transmission as received by the first UE.

At a third block 1006, when the measured signal strength is greater than at least one threshold, transmitting a signal within the frequency band during the COT.

According to aspects of the present disclosure, the signal strength may include a received signal strength indicator (RSSI) of the first transmission.

In aspects of the present disclosure, the signal strength may include a reference signal received power (RSRP) of the first transmission.

According to aspects of the present disclosure, a first UE performing operations 1000 may decode the first transmission of the first block 1002 or receive and decode a second transmission from the second UE; and determine, based on the decoded first transmission or the decoded second transmission, whether to share the COT in a frequency division multiplexing (FDM) manner or a time division multiplexing (TDM) manner, wherein transmitting the signal within the frequency band during the COT includes transmitting the signal in accordance with the determined multiplexing manner.

In some such aspects, transmitting the signal in accordance with the FDM manner may include: transmitting, by the first UE, the signal in a first sub-channel of the frequency band while leaving available for other use a second sub-channel of the frequency band. In some other such aspects, transmitting the signal in accordance with the TDM manner may include: transmitting, by the first UE, the signal in a sub-channel of the frequency band at a first time and leaving available for other use the sub-channel at a second time.

In aspects of the present disclosure, the at least one threshold of the third block 1006 may include one or more of an FDM signal strength threshold and a TDM signal strength threshold. In some such aspects, the FDM signal strength threshold is lower than the TDM signal strength threshold; the measured signal strength being greater than the at least one threshold includes the measured signal strength being greater than the FDM signal strength threshold and lower than the TDM signal strength threshold; and transmitting the signal as in the third block 1006 includes transmitting the signal in accordance with an FDM manner based on the measured signal strength being greater than the FDM signal strength threshold and lower than the TDM signal strength threshold. In some other such aspects, the FDM signal strength threshold is lower than the TDM signal strength threshold; the measured signal strength being greater than the at least one threshold comprises the measured signal strength being greater than the FDM signal strength threshold and greater than the TDM signal strength threshold; and transmitting the signal as in the third block 1006 includes transmitting the signal in accordance with one or more of an FDM manner and a TDM manner based on the measured signal strength being greater than the FDM signal strength threshold and greater than the TDM signal strength threshold.

According to aspects of the present disclosure, the at least one threshold of the third block 1006 may include an FDM signal strength threshold; and transmitting the signal as in the third block 1006 may include transmitting the signal in accordance with an FDM manner.

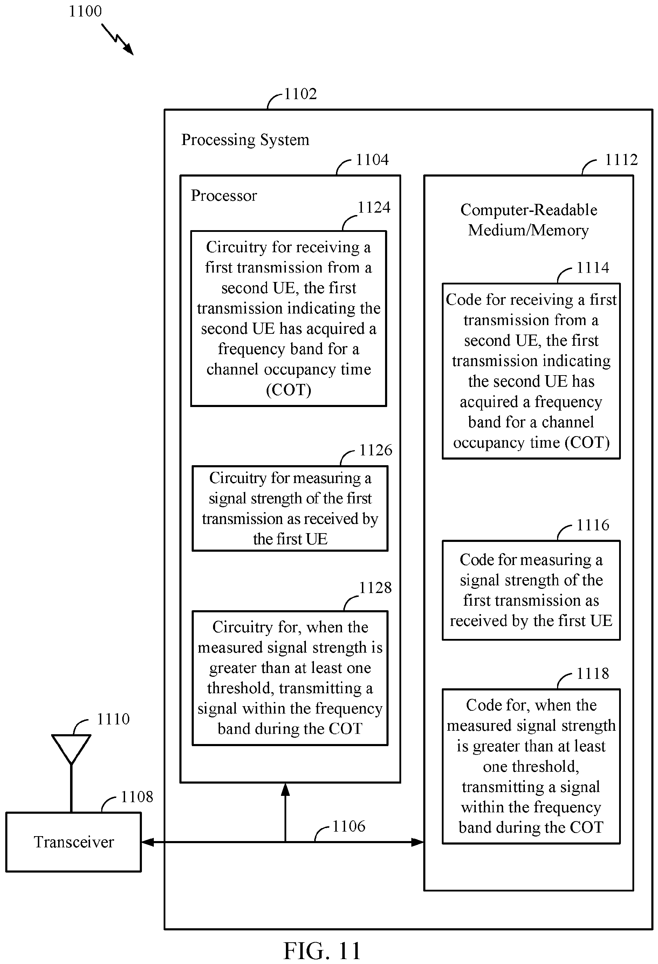

**FIG. 11** illustrates a communications device 1100 that may include various components (e.g., corresponding to means-plus-function components) configured to perform operations for the techniques disclosed herein, such as the operations illustrated in **FIG. 10****.** The communications device 1100 includes a processing system 1102 coupled to a transceiver 1108 (e.g., a transmitter and/or a receiver). The transceiver 1108 is configured to transmit and receive signals for the communications device 1100 via an antenna 1110, such as the various signals as described herein. The processing system 1102 may be configured to perform processing functions for the communications device 1100, including processing signals received and/or to be transmitted by the communications device 1100.

The processing system 1102 includes a processor 1104 coupled to a computer-readable medium/memory 1112 via a bus 1106. In certain aspects, the computer-readable medium/memory 1112 is configured to store instructions (e.g., computer-executable code) that when executed by the processor 1104, cause the processor 1104 to perform the operations illustrated in **FIG. 10****,** or other operations for performing the various techniques discussed herein for a user equipment (UE) to transmit a signal in an unlicensed frequency band (e.g., an unlicensed channel) during a COT for the unlicensed frequency band acquired by another UE, based on a received signal strength of a signal from the other UE.

In certain aspects, computer-readable medium/memory 1112 stores code 1114 for receiving a first transmission from a second UE, the first transmission indicating the second UE has acquired a frequency band for a COT; code 1116 for measuring a signal strength of the first transmission as received by the first UE; and code 1118 for, when the measured signal strength is greater than at least one threshold, transmitting a signal within the frequency band during the COT.

In certain aspects, the processor 1104 has circuitry configured to implement the code stored in the computer-readable medium/memory 1112. The processor 1104 includes circuitry 1124 for receiving a first transmission from a second UE, the first transmission indicating the second UE has acquired a frequency band for a COT; circuitry 1126 for measuring a signal strength of the first transmission as received by the first UE; and circuitry 1128 for, when the measured signal strength is greater than at least one threshold, transmitting a signal within the frequency band during the COT.

For example, means for transmitting (or means for outputting for transmission) may include the transmitter unit 254 and/or antenna(s) 252 of the UE 120a illustrated in **FIG. 2** and/or circuitry 1128 for, when the measured signal strength is greater than at least one threshold, transmitting a signal within the frequency band during the COT, of the communication device 1100 in **FIG. 11****.**

Means for receiving (or means for obtaining) may include a receiver and/or antenna(s) 252 of the UE 120a illustrated in **FIG. 2** and/or circuitry 1124 for receiving a first transmission from a second UE, the first transmission indicating the second UE has acquired a frequency band for a channel occupancy time (COT) of the communication device 1100 in **FIG. 11****.**

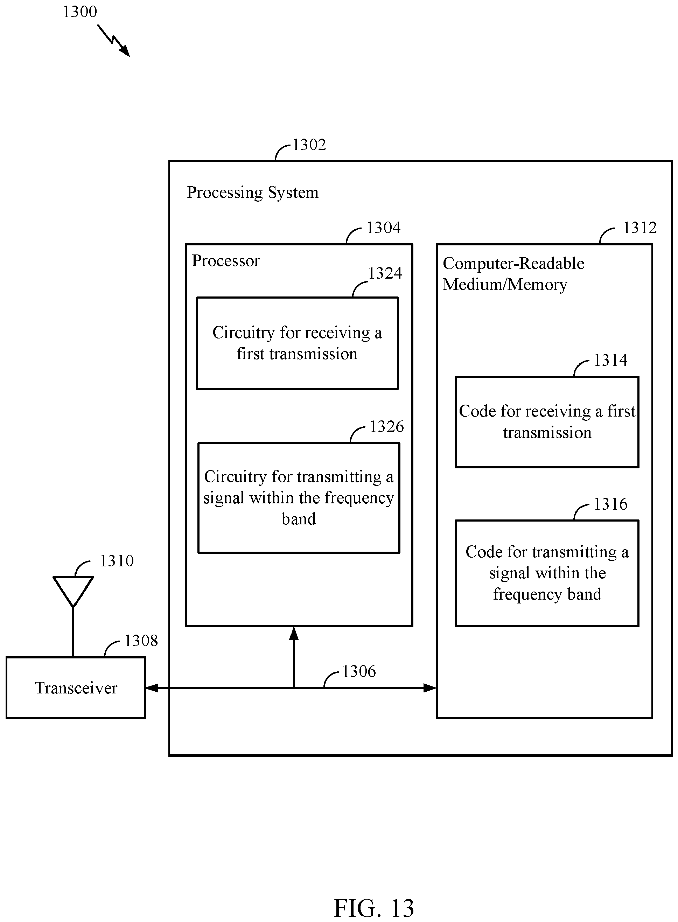

Means for communicating may include a transmitter, a receiver or both. Means for generating, means for performing, means for determining, means for taking action, means for determining, means for coordinating, means for sensing, means for measuring may include a processing system, which may include one or more processors, such as the receive processor 258, the transmit processor 264, the TX MIMO processor 266, and/or the controller/processor 280 of the UE 120a illustrated in **FIG. 2****,** the processing system 1302 and/or the circuitry 1126 for measuring a signal strength of the first transmission as received by the first UE of the communication device 1300 in **FIG. 13****.**

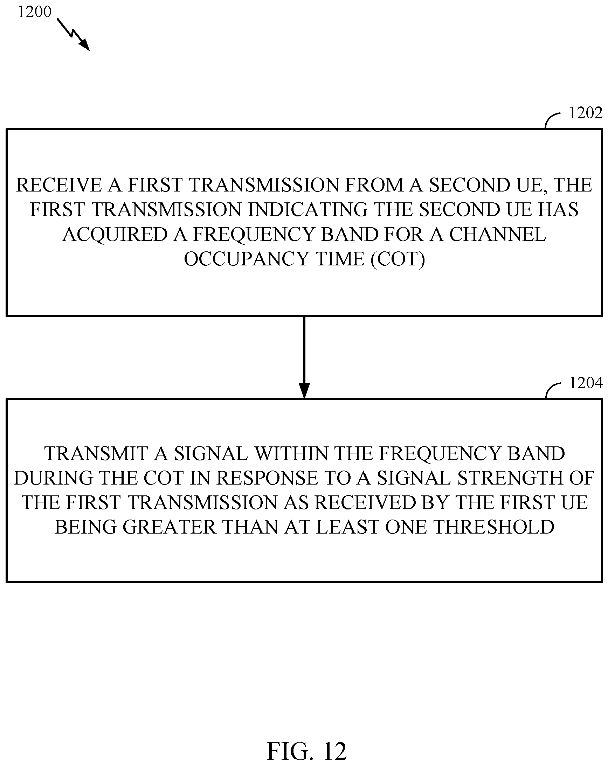

**FIG. 12** is a flow diagram illustrating example operations 1200 for wireless communication, in accordance with certain aspects of the present disclosure. The operations 1200 may be performed, for example, by a first UE (e.g., the UE 120a in the wireless communication network 100 of **FIG. 1**). The operations 1200 may be implemented as software components that are executed and run on one or more processors (e.g., controller/processor 280 of **FIG. 2**). Further, the transmission and reception of signals by the UE in operations 1200 may be enabled, for example, by one or more antennas (e.g., antennas 252 of **FIG. 2**). In certain aspects, the transmission and/or reception of signals by the UE may be implemented via a bus interface of one or more processors (e.g., controller/processor 280) obtaining and/or outputting signals.

The operations 1200 may begin, at a first block 1202, by receiving a first transmission from a second UE, the first transmission indicating the second UE has acquired a frequency band for a channel occupancy time (COT).

The operations 1200 may proceed, at a second block 1204, by transmitting a signal within the frequency band during the COT in response to a signal strength of the first transmission as received by the first UE being greater than at least one threshold.

In certain aspects, the signal strength of the first transmission as received by the first UE comprises a received signal strength indicator (RSSI) of the first transmission.

In certain aspects, the signal strength of the first transmission as received by the first UE comprises a reference signal received power (RSRP) of the first transmission.

In certain aspects, transmitting the signal comprises: transmitting the signal in a first sub-channel of the frequency band; and refraining from transmitting in a second sub-channel of the frequency band based on control information indicated in the first transmission and the signal strength of the first transmission as received by the first UE.

In certain aspects, transmitting the signal comprises: transmitting the signal in a sub-channel of the frequency band at a first time; and refraining from transmitting at a second time based on control information indicated in the first transmission and the signal strength of the first transmission as received by the first UE.

In certain aspects, wherein the at least one threshold comprises one or more of a frequency division multiplexing (FDM) signal strength threshold or a time division multiplexing (TDM) signal strength threshold.

In certain aspects, the FDM signal strength threshold is lower than the TDM signal strength threshold; the signal strength of the first transmission being greater than the at least one threshold comprises the received signal of the first transmission strength being greater than the FDM signal strength threshold and lower than the TDM signal strength threshold; and transmitting the signal comprises transmitting the signal in a first sub-channel of the frequency band and refraining from transmitting in a second sub-channel of the frequency band based on the signal strength of the first transmission being greater than the FDM signal strength threshold and lower than the TDM signal strength threshold.

In certain aspects, the FDM signal strength threshold is lower than the TDM signal strength threshold; the signal strength of the first transmission as received by the first UE being greater than the at least one threshold comprises the signal strength of the first transmission being greater than the FDM signal strength threshold and greater than the TDM signal strength threshold; and transmitting the signal, based on the signal strength of the first transmission being greater than the FDM signal strength threshold and greater than the TDM signal strength threshold, comprises one or more of: transmitting the signal in a first sub-channel of the frequency band and refraining from transmitting in a second sub-channel of the frequency band; or transmitting the signal in one or more sub-channels of the frequency band at a first time and refraining from transmitting at a second time.

In certain aspects, the at least one threshold comprises a frequency division multiplexing (FDM) signal strength threshold; and transmitting the signal comprises transmitting the signal in a first sub-channel of the frequency band and refraining from transmitting in a second sub-channel of the frequency band.

**FIG. 13** illustrates a communications device 1300 that may include various components (e.g., corresponding to means-plus-function components) configured to perform operations for the techniques disclosed herein, such as the operations illustrated in **FIG. 12****.** The communications device 1300 includes a processing system 1302 coupled to a transceiver 1308 (e.g., a transmitter and/or a receiver). The transceiver 1308 is configured to transmit and receive signals for the communications device 1300 via an antenna 1310, such as the various signals as described herein. The processing system 1302 may be configured to perform processing functions for the communications device 1300, including processing signals received and/or to be transmitted by the communications device 1300.

The processing system 1302 includes a processor 1304 coupled to a computer-readable medium/memory 1312 via a bus 1306. In certain aspects, the computer-readable medium/memory 1312 is configured to store instructions (e.g., computer-executable code) that when executed by the processor 1304, cause the processor 1304 to perform the operations illustrated in **FIG. 12****,** or other operations for performing the various techniques discussed herein for a user equipment (UE) to transmit a signal in an unlicensed frequency band (e.g., an unlicensed channel) during a COT for the unlicensed frequency band acquired by another UE, based on a received signal strength of a signal from the other UE.

In certain aspects, computer-readable medium/memory 1312 stores code 1314 for receiving a first transmission from a second UE, the first transmission indicating the second UE has acquired a frequency band for a channel occupancy time (COT); and code 1316 for transmitting a signal within the frequency band during the COT in response to a signal strength of the first transmission as received by the first UE being greater than at least one threshold.

In certain aspects, the processor 1304 has circuitry configured to implement the code stored in the computer-readable medium/memory 1312. The processor 1304 includes circuitry 1324 for receiving a first transmission from a second UE, the first transmission indicating the second UE has acquired a frequency band for a COT; circuitry 1326 for transmitting a signal within the frequency band during the COT in response to a signal strength of the first transmission as received by the first UE being greater than at least one threshold.

For example, means for transmitting (or means for outputting for transmission) may include the transmitter unit 254 and/or antenna(s) 252 of the UE 120a illustrated in **FIG. 2** and/or circuitry 1326 for transmitting a signal within the frequency band during the COT in response to a signal strength of the first transmission as received by the first UE being greater than at least one threshold, of the communication device 1300 in **FIG. 13****.**

Means for receiving (or means for obtaining) may include a receiver and/or antenna(s) 252 of the UE 120a illustrated in **FIG. 2** and/or circuitry 1324 for receiving a first transmission from a second UE, the first transmission indicating the second UE has acquired a frequency band for a channel occupancy time (COT), of the communication device 1300 in **FIG. 13****.**

Means for communicating may include a transmitter, a receiver or both. Means for generating, means for performing, means for determining, means for taking action, means for determining, means for coordinating, means for sensing, means for measuring may include a processing system, which may include one or more processors, such as the receive processor 258, the transmit processor 264, the TX MIMO processor 266, and/or the controller/processor 280 of the UE 120a illustrated in **FIG. 2** and/or the processing system 1302 of the communication device 1300 in **FIG. 13****.**

### Additional Considerations

The techniques described herein may be used for various wireless communication technologies, such as NR (e.g., 5G NR), 3GPP Long Term Evolution (LTE), LTE-Advanced (LTE-A), code division multiple access (CDMA), time division multiple access (TDMA), frequency division multiple access (FDMA), orthogonal frequency division multiple access (OFDMA), single-carrier frequency division multiple access (SC-FDMA), time division synchronous code division multiple access (TD-SCDMA), and other networks. The terms "network" and "system" are often used interchangeably. A CDMA network may implement a radio technology such as Universal Terrestrial Radio Access (UTRA), CDMA2000, etc. UTRA includes Wideband CDMA (WCDMA) and other variants of CDMA. CDMA2000 covers IS-2000, IS-95 and IS-856 standards. A TDMA network may implement a radio technology such as Global System for Mobile Communications (GSM). An OFDMA network may implement a radio technology such as NR (e.g. 5G RA), Evolved UTRA (E-UTRA), Ultra Mobile Broadband (UMB), IEEE 802.11 (Wi-Fi), IEEE 802.16 (WiMAX), IEEE 802.20, Flash-OFDMA, etc. UTRA and E-UTRA are part of Universal Mobile Telecommunication System (UMTS). LTE and LTE-A are releases of UMTS that use E-UTRA. UTRA, E-UTRA, UMTS, LTE, LTE-A and GSM are described in documents from an organization named "3rd Generation Partnership Project" (3GPP). cdma2000 and UMB are described in documents from an organization named "3rd Generation Partnership Project 2" (3GPP2). NR is an emerging wireless communications technology under development.

In 3GPP, the term "cell" can refer to a coverage area of a Node B (NB) and/or a NB subsystem serving this coverage area, depending on the context in which the term is used. In NR systems, the term "cell" and BS, next generation NodeB (gNB or gNodeB), access point (AP), distributed unit (DU), carrier, or transmission reception point (TRP) may be used interchangeably. A BS may provide communication coverage for a macro cell, a pico cell, a femto cell, and/or other types of cells. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having an association with the femto cell (e.g., UEs in a Closed Subscriber Group (CSG), UEs for users in the home, etc.). A BS for a macro cell may be referred to as a macro BS. A BS for a pico cell may be referred to as a pico BS. A BS for a femto cell may be referred to as a femto BS or a home BS.

Within the present document, the term "user equipment (UE)" or "CV2X device" broadly refers to a diverse array of devices and technologies. UEs and CV2X devices may include a number of hardware structural components sized, shaped, and arranged to help in communication; such components can include antennas, antenna arrays, radio frequency (RF) chains, amplifiers, one or more processors, etc. electrically coupled to each other. For example, some non-limiting examples of a UE or CV2X device include a mobile, a cellular (cell) phone, a smart phone, a session initiation protocol (SIP) phone, a laptop, a personal computer (PC), a notebook, a netbook, a smartbook, a tablet, a personal digital assistant (PDA), and a broad array of embedded systems, e.g., corresponding to an "Internet of things" (IoT). A UE or CV2X device may additionally be an automotive or other transportation vehicle, a remote sensor or actuator, a robot or robotics device, a satellite radio, a global positioning system (GPS) device, an object tracking device, a drone, a multi-copter, a quad-copter, a remote control device, a consumer and/or wearable device, such as eyewear, a wearable camera, a virtual reality device, a smart watch, a health or fitness tracker, a digital audio player (e.g., MP3 player), a camera, a game console, etc. A UE or CV2X device may additionally be a digital home or smart home device such as a home audio, video, and/or multimedia device, an appliance, a vending machine, intelligent lighting, a home security system, a smart meter, etc. A UE or CV2X device may additionally be a smart energy device, a security device, a solar panel or solar array, a municipal infrastructure device (e.g., a smart grid, public WiFi, etc.), an industrial automation and enterprise device, a logistics controller, agricultural equipment, military defense equipment: vehicles, aircraft, ships, and weaponry, etc. Still further, a UE or CV2X device may provide for connected medicine or telemedicine support, e.g., health care at a distance. Telehealth devices may include telehealth monitoring devices and telehealth administration devices, whose communication may be given preferential treatment or prioritized access over other types of information, e.g., in terms of prioritized access for transport of critical service data, and/or relevant QoS for transport of critical service data.

In some examples, access to the air interface may be scheduled. A scheduling entity (e.g., a BS) allocates resources for communication among some or all devices and equipment within its service area or cell. The scheduling entity may be responsible for scheduling, assigning, reconfiguring, and releasing resources for one or more subordinate entities. That is, for scheduled communication, subordinate entities utilize resources allocated by the scheduling entity. Base stations are not the only entities that may function as a scheduling entity. In some examples, a UE may function as a scheduling entity and may schedule resources for one or more subordinate entities (e.g., one or more other UEs), and the other UEs may utilize the resources scheduled by the UE for wireless communication. In some examples, a UE may function as a scheduling entity in a peer-to-peer (P2P) network, and/or in a mesh network. In a mesh network example, UEs may communicate directly with one another in addition to communicating with a scheduling entity.

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language of the claims, wherein reference to an element in the singular is not intended to mean "one and only one" unless specifically so stated, but rather "one or more." Unless specifically stated otherwise, the term "some" refers to one or more.

The various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

The various illustrative logical blocks, modules and circuits described in connection with the present disclosure may be implemented or performed with a general purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

If implemented in hardware, an example hardware configuration may comprise a processing system in a wireless node. The processing system may be implemented with a bus architecture. The bus may include any number of interconnecting buses and bridges depending on the specific application of the processing system and the overall design constraints. The bus may link together various circuits including a processor, machine-readable media, and a bus interface. The bus interface may be used to connect a network adapter, among other things, to the processing system via the bus. The network adapter may be used to implement the signal processing functions of the physical (PHY) layer. In the case of a user terminal (see **FIG. 1**), a user interface (e.g., keypad, display, mouse, joystick, etc.) may also be connected to the bus. The bus may also link various other circuits such as timing sources, peripherals, voltage regulators, power management circuits, and the like, which are well known in the art, and therefore, will not be described any further. The processor may be implemented with one or more general-purpose and/or special-purpose processors. Examples include microprocessors, microcontrollers, DSP processors, and other circuitry that can execute software. Those skilled in the art will recognize how best to implement the described functionality for the processing system depending on the particular application and the overall design constraints imposed on the overall system.

If implemented in software, the functions may be stored or transmitted over as one or more instructions or code on a computer readable medium. Software shall be construed broadly to mean instructions, data, or any combination thereof, whether referred to as software, firmware, middleware, microcode, hardware description language, or otherwise. Computer-readable media include both computer storage media and communication media including any medium that facilitates transfer of a computer program from one place to another. The processor may be responsible for managing the bus and general processing, including the execution of software modules stored on the machine-readable storage media. A computer-readable storage medium may be coupled to a processor such that the processor can read information from, and write information to, the storage medium. In the alternative, the storage medium may be integral to the processor. By way of example, the machine-readable media may include a transmission line, a carrier wave modulated by data, and/or a computer readable storage medium with instructions stored thereon separate from the wireless node, all of which may be accessed by the processor through the bus interface. Alternatively, or in addition, the machine-readable media, or any portion thereof, may be integrated into the processor, such as the case may be with cache and/or general register files. Examples of machine-readable storage media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The machine-readable media may be embodied in a computer-program product.

A software module may comprise a single instruction, or many instructions, and may be distributed over several different code segments, among different programs, and across multiple storage media. The computer-readable media may comprise a number of software modules. The software modules include instructions that, when executed by an apparatus such as a processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module below, it will be understood that such functionality is implemented by the processor when executing instructions from that software module.

Also, any connection is properly termed a computer-readable medium. For example, if the software is transmitted from a website, server, or other remote source using a coaxial cable, fiber optic cable, twisted pair, digital subscriber line (DSL), or wireless technologies such as infrared (IR), radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk, and Blu-ray^{®} disc where disks usually reproduce data magnetically, while discs reproduce data optically with lasers. Thus, in some aspects computer-readable media may comprise non-transitory computer-readable media (e.g., tangible media). In addition, for other aspects computer-readable media may comprise transitory computer-readable media (e.g., a signal). Combinations of the above should also be included within the scope of computer-readable media.

Thus, certain aspects may comprise a computer program product for performing the operations presented herein. For example, such a computer program product may comprise a computer-readable medium having instructions stored (and/or encoded) thereon, the instructions being executable by one or more processors to perform the operations described herein, for example, instructions for performing the operations described herein and illustrated in **FIGs. 10** **and** **12**.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the claims.

## Claims

1. A method for wireless communications performed by a first user equipment, UE, comprising:
receiving (1202) a first transmission from a second UE, the first transmission indicating the second UE has acquired a frequency band for a channel occupancy time, COT; and
transmitting (1204) a signal within the frequency band during the COT in response to a signal strength of the first transmission as received by the first UE being greater than at least one threshold.

2. The method of claim 1, wherein the signal strength of the first transmission as received by the first UE comprises a received signal strength indicator, RSSI, of the first transmission.

3. The method of claim 1, wherein the signal strength of the first transmission as received by the first UE comprises a reference signal received power, RSRP, of the first transmission.

4. The method of claim 1, wherein transmitting the signal comprises:
transmitting the signal in a first sub-channel of the frequency band; and
refraining from transmitting in a second sub-channel of the frequency band based on control information indicated in the first transmission and the signal strength of the first transmission as received by the first UE.

5. The method of claim 1, wherein transmitting the signal comprises:
transmitting the signal in a sub-channel of the frequency band at a first time; and
refraining from transmitting at a second time based on control information indicated in the first transmission and the signal strength of the first transmission as received by the first UE.

6. The method of claim 1, wherein the at least one threshold comprises one or more of a frequency division multiplexing, FDM, signal strength threshold or a time division multiplexing, TDM, signal strength threshold.

7. The method of claim 6, wherein:
the FDM signal strength threshold is lower than the TDM signal strength threshold;
the signal strength of the first transmission being greater than the at least one threshold comprises the received signal of the first transmission strength being greater than the FDM signal strength threshold and lower than the TDM signal strength threshold; and
transmitting the signal comprises transmitting the signal in a first sub-channel of the frequency band and refraining from transmitting in a second sub-channel of the frequency band based on the signal strength of the first transmission being greater than the FDM signal strength threshold and lower than the TDM signal strength threshold.

8. The method of claim 6, wherein:
the FDM signal strength threshold is lower than the TDM signal strength threshold;
the signal strength of the first transmission as received by the first UE being greater than the at least one threshold comprises the signal strength of the first transmission being greater than the FDM signal strength threshold and greater than the TDM signal strength threshold; and
transmitting the signal, based on the signal strength of the first transmission being greater than the FDM signal strength threshold and greater than the TDM signal strength threshold, comprises one or more of:
transmitting the signal in a first sub-channel of the frequency band and refraining from transmitting in a second sub-channel of the frequency band; or
transmitting the signal in one or more sub-channels of the frequency band at a first time and refraining from transmitting at a second time.

9. The method of claim 1, wherein:
the at least one threshold comprises a frequency division multiplexing, FDM, signal strength threshold; and
transmitting the signal comprises transmitting the signal in a first sub-channel of the frequency band and refraining from transmitting in a second sub-channel of the frequency band.

10. A first user equipment, UE, comprising:
means for receiving (1202) a first transmission from a second UE, the first transmission indicating the second UE has acquired a frequency band for a channel occupancy time, COT; and
means for transmitting (1204) a signal within the frequency band during the COT in response to a signal strength of the first transmission as received by the first UE being greater than at least one threshold.

11. The first UE of claim 10, wherein the signal strength of the first transmission as received by the first UE comprises a received signal strength indicator, RSSI, of the first transmission or wherein the signal strength of the first transmission as received by the first UE comprises a reference signal received power, RSRP, of the first transmission.

12. The first UE of claim 10, wherein the means for transmitting the signal further comprises:
means for transmitting the signal in a first sub-channel of the frequency band; and
means for refraining from transmitting in a second sub-channel of the frequency band based on control information indicated in the first transmission and the signal strength of the first transmission as received by the first UE.

13. The first UE of claim 10, wherein the means for transmitting the signal further comprises:
means for transmitting the signal in a sub-channel of the frequency band at a first time; and
means for refraining from transmitting at a second time based on control information indicated in the first transmission and the signal strength of the first transmission as received by the first UE.

14. The first UE of claim 10, wherein the at least one threshold comprises one or more of a frequency division multiplexing, FDM, signal strength threshold or a time division multiplexing, TDM, signal strength threshold.

15. A computer program comprising instructions which, when the program is executed by a user equipment, cause the user equipment to carry out the method of any of claims 1 to 9.

## Patentansprüche

1. Verfahren zur drahtlosen Kommunikation, das von einem ersten Benutzergerät, UE, durchgeführt wird, umfassend:
Empfangen (1202) einer ersten Übertragung von einem zweiten UE, wobei die erste Übertragung anzeigt, dass das zweite UE ein Frequenzband für eine Kanalbelegungszeit, COT, erworben hat; und
Übertragen (1204) eines Signals innerhalb des Frequenzbands während der COT als Reaktion darauf, dass eine Signalstärke der ersten Übertragung, wie von dem ersten UE empfangen, größer als mindestens ein Schwellenwert ist.

2. Verfahren nach Anspruch 1, wobei die Signalstärke der ersten Übertragung, wie von dem ersten UE empfangen, einen Empfangssignalstärkeindikator, RSSI, der ersten Übertragung umfasst.

3. Verfahren nach Anspruch 1, wobei die Signalstärke der ersten Übertragung, wie von dem ersten UE empfangen, eine Referenzsignalempfangsleistung, RSRP, der ersten Übertragung umfasst.

4. Verfahren nach Anspruch 1, wobei Übertragen des Signals umfasst:
Übertragen des Signals in einem ersten Unterkanal des Frequenzbands; und
Unterlassen von Übertragen in einem zweiten Unterkanal des Frequenzbands basierend auf Steuerinformation, die in der ersten Übertragung und der Signalstärke der ersten Übertragung, wie von dem ersten UE empfangen, angezeigt wird.

5. Verfahren nach Anspruch 1, wobei Übertragen des Signals umfasst:
Übertragen des Signals in einem Unterkanal des Frequenzbands zu einem ersten Zeitpunkt; und
Unterlassen von Übertragen zu einem zweiten Zeitpunkt basierend auf Steuerinformation, die in der ersten Übertragung und der Signalstärke der ersten Übertragung, wie von dem ersten UE empfangen, angezeigt wird.

6. Verfahren nach Anspruch 1, wobei der mindestens eine Schwellenwert einen oder mehrere von einem Frequenzmultiplex-, FDM-, Signalstärkeschwellenwert oder einem Zeitmultiplex-, TDM-, Signalstärkeschwellenwert umfasst.

7. Verfahren nach Anspruch 6, wobei:
der FDM-Signalstärkeschwellenwert niedriger als der TDM-Signalstärkeschwellenwert ist;
die Signalstärke der ersten Übertragung, die größer als der mindestens eine Schwellenwert ist, umfasst, dass das empfangene Signal der ersten Übertragungsstärke größer als der FDM-Signalstärkeschwellenwert und niedriger als der TDM-Signalstärkeschwellenwert ist; und
Übertragen des Signals Übertragen des Signals in einem ersten Unterkanal des Frequenzbands und Unterlassen von Übertragen in einem zweiten Unterkanal des Frequenzbands basierend darauf, dass die Signalstärke der ersten Übertragung größer als der FDM-Signalstärkeschwellenwert und niedriger als der TDM-Signalstärkeschwellenwert ist, umfasst.

8. Verfahren nach Anspruch 6, wobei:
der FDM-Signalstärkeschwellenwert niedriger als der TDM-Signalstärkeschwellenwert ist;
die Signalstärke der ersten Übertragung, wie von dem ersten UE empfangen, die größer als der mindestens eine Schwellenwert ist, umfasst, dass die Signalstärke der ersten Übertragung größer als der FDM-Signalstärkeschwellenwert und größer als der TDM-Signalstärkeschwellenwert ist; und
Übertragen des Signals basierend darauf, dass die Signalstärke der ersten Übertragung größer als der FDM-Signalstärkeschwellenwert und größer als der TDM-Signalstärkeschwellenwert ist, eines oder mehreres von Folgendem umfasst:
Übertragen des Signals in einem ersten Unterkanal des Frequenzbands und
Unterlassen von Übertragen in einem zweiten Unterkanal des Frequenzbands; oder
Übertragen des Signals in einem oder mehreren Unterkanälen des Frequenzbands zu einem ersten Zeitpunkt und Unterlassen von Übertragen zu einem zweiten Zeitpunkt.

9. Verfahren nach Anspruch 1, wobei:
der mindestens eine Schwellenwert einen Frequenzmultiplex-, FDM-,
Signalstärkeschwellenwert umfasst; und
Übertragen des Signals Übertragen des Signals in einem ersten Unterkanal des Frequenzbands und Unterlassen von Übertragen in einem zweiten Unterkanal des Frequenzbands umfasst.

10. Erstes Benutzergerät, UE, umfassend:
Mittel zum Empfangen (1202) einer ersten Übertragung von einem zweiten UE, wobei die erste Übertragung anzeigt, dass das zweite UE ein Frequenzband für eine Kanalbelegungszeit, COT, erworben hat; und
Mittel zum Übertragen (1204) eines Signals innerhalb des Frequenzbands während der COT als Reaktion darauf, dass eine Signalstärke der ersten Übertragung, wie von dem ersten UE empfangen, größer als mindestens ein Schwellenwert ist.

11. Erstes UE nach Anspruch 10, wobei die Signalstärke der ersten Übertragung, wie von dem ersten UE empfangen, einen Empfangssignalstärkeindikator, RSSI, der ersten Übertragung umfasst oder wobei die Signalstärke der ersten Übertragung, wie von dem ersten UE empfangen, eine Referenzsignalempfangsleistung, RSRP, der ersten Übertragung umfasst.

12. Erstes UE nach Anspruch 10, wobei das Mittel zum Übertragen des Signals ferner umfasst:
Mittel zum Übertragen des Signals in einem ersten Unterkanal des Frequenzbands; und
Mittel zum Unterlassen von Übertragen in einem zweiten Unterkanal des Frequenzbands basierend auf Steuerinformation, die in der ersten Übertragung und der Signalstärke der ersten Übertragung, wie von dem ersten UE empfangen, angezeigt wird.

13. Erstes UE nach Anspruch 10, wobei das Mittel zum Übertragen des Signals ferner umfasst:
Mittel zum Übertragen des Signals in einem Unterkanal des Frequenzbands zu einem ersten Zeitpunkt; und
Mittel zum Unterlassen von Übertragen zu einem zweiten Zeitpunkt basierend auf Steuerinformation, die in der ersten Übertragung und der Signalstärke der ersten Übertragung, wie von dem ersten UE empfangen, angezeigt wird.

14. Erstes UE nach Anspruch 10, wobei der mindestens eine Schwellenwert einen oder mehrere von einem Frequenzmultiplex-, FDM-, Signalstärkeschwellenwert oder einem Zeitmultiplex-, TDM-, Signalstärkeschwellenwert umfasst.

15. Computerprogramm, umfassend Anweisungen, die, wenn das Programm von einem Benutzergerät ausgeführt wird, das Benutzergerät veranlassen, das Verfahren nach einem der Ansprüche 1 bis 9 durchzuführen.

## Revendications

1. Un procédé de communication sans fil réalisé par un premier équipement utilisateur, UE, comprenant :
la réception (1202) d'une première transmission à partir d'un deuxième UE, la première transmission indiquant que le deuxième UE a acquis une bande de fréquences pour un temps d'occupation de canal, COT ; et
la transmission (1204) d'un signal dans la bande de fréquences pendant le COT en réponse au fait qu'une intensité de signal de la première transmission telle que reçue par le premier UE est supérieure à au moins un seuil.

2. Le procédé selon la revendication 1, dans lequel l'intensité de signal de la première transmission telle que reçue par le premier UE comprend un indicateur d'intensité de signal reçue, RSSI, de la première transmission.

3. Le procédé selon la revendication 1, dans lequel l'intensité de signal de la première transmission telle que reçue par le premier UE comprend une puissance reçue de signal de référence, RSRP, de la première transmission.

4. Le procédé selon la revendication 1, dans lequel la transmission du signal comprend :
la transmission du signal dans un premier sous-canal de la bande de fréquences ; et
la non-transmission dans un deuxième sous-canal de la bande de fréquences, sur la base d'une information de contrôle indiquée dans la première transmission et de l'intensité de signal de la première transmission telle que reçue par le premier UE.

5. Le procédé selon la revendication 1, dans lequel la transmission du signal comprend :
la transmission du signal dans un sous-canal de la bande de fréquences à un premier instant ; et
la non-transmission à un deuxième instant, sur la base d'une information de contrôle indiquée dans la première transmission et de l'intensité de signal de la première transmission telle que reçue par le premier UE.

6. Le procédé selon la revendication 1, dans lequel l'au moins un seuil comprend un ou plusieurs parmi un seuil d'intensité de signal de multiplexage par répartition en fréquence, FDM, ou un seuil d'intensité de signal de multiplexage par répartition dans le temps, TDM.

7. Le procédé selon la revendication 6, dans lequel :
le seuil d'intensité de signal FDM est inférieur au seuil d'intensité de signal TDM ;
le fait que l'intensité de signal de la première transmission est supérieure à l'au moins un seuil comprend le fait que l'intensité de signal reçue de la première transmission est supérieure au seuil d'intensité de signal FDM et inférieure au seuil d'intensité de signal TDM ; et
la transmission du signal comprend la transmission du signal dans un premier sous-canal de la bande de fréquences et la non-transmission dans un deuxième sous-canal de la bande de fréquences, sur la base du fait que l'intensité de signal de la première transmission est supérieure au seuil d'intensité de signal FDM et inférieure au seuil d'intensité de signal TDM.

8. Le procédé selon la revendication 6, dans lequel :
le seuil d'intensité de signal FDM est inférieur au seuil d'intensité de signal TDM ;
le fait que l'intensité de signal de la première transmission telle que reçue par le premier UE est supérieure à l'au moins un seuil comprend le fait que l'intensité de signal de la première transmission est supérieure au seuil d'intensité de signal FDM et supérieure au seuil d'intensité de signal TDM ; et
la transmission du signal, sur la base du fait que l'intensité de signal de la première transmission est supérieure au seuil d'intensité de signal FDM et supérieure au seuil d'intensité de signal TDM, comprend une ou plusieurs parmi :
la transmission du signal dans un premier sous-canal de la bande de fréquences et la non-transmission dans un deuxième sous-canal de la bande de fréquences ; ou
la transmission du signal dans un ou plusieurs sous-canaux de la bande de fréquences à un premier instant, et la non-transmission à un deuxième instant.

9. Le procédé selon la revendication 1, dans lequel :
l'au moins un seuil comprend un seuil d'intensité de signal de multiplexage par répartition en fréquence, FDM ; et
la transmission du signal comprend la transmission du signal dans un premier sous-canal de la bande de fréquences, et la non-transmission dans un deuxième sous-canal de la bande de fréquences.

10. Un premier équipement utilisateur, UE, comprenant :
un moyen pour recevoir (1202) une première transmission à partir d'un deuxième UE, la première transmission indiquant que le deuxième UE a acquis une bande de fréquences pour un temps d'occupation de canal, COT ; et
un moyen pour transmettre (1204) un signal dans la bande de fréquences pendant le COT en réponse au fait que l'intensité de signal de la première transmission telle que reçue par le premier UE est supérieure à au moins un seuil.

11. Le premier UE selon la revendication 10, dans lequel l'intensité de signal de la première transmission telle que reçue par le premier UE comprend un indicateur d'intensité de signal reçue, RSSI, de la première transmission, ou dans lequel l'intensité de signal de la première transmission telle que reçue par le premier UE comprend une puissance reçue de signal de référence, RSRP, de la première transmission.

12. Le premier UE selon la revendication 10, dans lequel le moyen pour transmettre le signal comprend en outre :
un moyen pour transmettre le signal dans un premier sous-canal de la bande de fréquences ; et
un moyen pour ne pas transmettre dans un deuxième sous-canal de la bande de fréquences, sur la base d'une information de contrôle indiquée dans la première transmission et de l'intensité de signal de la première transmission telle que reçue par le premier UE.

13. Le premier UE selon la revendication 10, dans lequel le moyen pour transmettre le signal comprend en outre :
un moyen pour transmettre le signal dans un sous-canal de la bande de fréquences à un premier instant ; et
un moyen pour ne pas transmettre à un deuxième instant, sur la base d'une information de contrôle indiquée dans la première transmission et de l'intensité de signal de la première transmission telle que reçue par le premier UE.

14. Le premier UE selon la revendication 10, dans lequel l'au moins un seuil comprend un ou plusieurs parmi un seuil d'intensité de signal de multiplexage par répartition en fréquence, FDM, ou un seuil d'intensité de signal de multiplexage par répartition dans le temps, TDM.

15. Un programme de calculateur comprenant des instructions qui, quand le programme est exécuté par un équipement utilisateur, amènent l'équipement utilisateur à réaliser le procédé selon l'une des revendications 1 à 9.
